# EUROPEAN PATENT APPLICATION

(11) **EP 4 686 163 A2**
(43) Date of publication of application: **28.01.2026**
(21) Application number: 25222042.1
(22) Date of filing: 22.11.2022
(51) Int. Cl.: H04L 41/50

(54) **DISCOVERY PROCEDURE FOR SEARCHING PREFERRED NETWORK FUNCTION (NF) WHICH IMPLEMENTS A SERVICE PRODUCER**

(30) Priority: 20.12.2021 WO PCT/CN2021/139675
(62) Divisional of application: 22836033.5
(71) Applicant: Telefonaktiebolaget LM Ericsson (publ), 164 83 Stockholm (SE)
(72) Inventor: Xia, Lei, Shanghai, 200335 (CN); Li, Xiaoming, Shanghai, 200335 (CN); Lu, Yunjie, Shanghai, 200335 (CN)
(74) Representative: Ericsson

(57) **Abstract**

The embodiments herein relate to support of preferred service provider/producer query for Network Repository Function (NRF). In some embodiments, there proposes a method (400) performed by a first network function (101, 201) implementing a service consumer. In an embodiment, the method (400) may comprise the step of transmitting (S401), to a second network function (102) implementing a NRF, a discovery request for discovering one or more third network functions (103) implementing service producers. The discovery request may include a preference indication for indicating whether one or more combined third network functions (103) or one or more standalone third network functions (103) are preferred. The method (400) may further comprise the step of receiving (S402), from the second network function (102), a discovery response including information about the discovered one or more third network functions (103). The discovered one or more third network functions (103) may be provided based on the preference indication by the second network function (102). With the embodiments herein, the combined PGW-C+SMF and/or standalone SMF with priority may be presented in the query results for service provider/producer, and may reduce the processing time of both service consumer and the NRF.

## Description

### Technical Field

The embodiments herein relate generally to the field of mobile communication, and more particularly, the embodiments herein relate to support of preferred service provider/producer query for Network Repository Function (NRF).

### Background

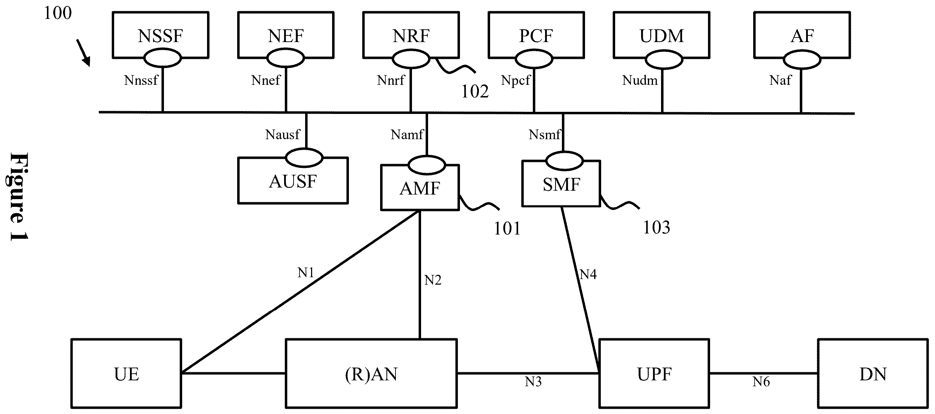

Figure 1 is a schematic block diagram showing example architecture 100 for 5G network architecture at non-roaming scenario. Currently, during the Protocol Data Unit (PDU) session establishment procedure, in 5G Core (5GC) network, an Access and Mobility Management Function (AMF) 101 may send several Session Management Function (SMF) query parameters to an NRF 102 for discovering available one or more SMF(s) 103. The NRF 102 may discover (filter) a plurality of SMF candidates 103 matched with the query parameters, and respond to the AMF 101 with these SMF candidates 103. Then the AMF 101 may perform an internal sorting for these SMF candidates 103 based on their priorities, capacity, load, etc. and select the most matched SMF 103 for establishing a PDU session.

3GPP TSG - CT WG4 Meeting # 89; C4 - 190444 discloses limiting the number of NFProfiles returned in NFDiscover response, in which the parameter "limit" is introduced to limit the number of the profiles returned.

US2021/168055A1 discloses preference information, which is received at a network repository function from a first network function. The preference information indicating one or more optional preferences for a respective second network function or network function service. Information is provided to the first network function about one or more second network functions or network function services, the one or more second network functions or network function services being selected taking into account the preference information.

### Summary

The embodiments herein propose methods, network functions, computer readable mediums and computer program products for supporting preferred service provider/producer query for NRF.

In a first aspect of the present disclosure, there proposes a method performed by a first network function implementing a service consumer. The method comprises transmitting, to a second network function implementing an NRF, a discovery request for discovering one or more third network functions implementing service producers. The discovery request includes one or more query parameters and a preference indication indicating whether one or more combined third network functions or one or more standalone third network functions are preferred. The method further comprises receiving, from the second network function, a discovery response including information about the discovered one or more third network functions and a match indication indicating whether the discovered one or more third network functions match the preference indication. When the match indication indicates there is no matching to the preference indication, the discovered one or more third network functions comprise one or more non-preferred third network functions matching the one or more query parameters.

In a second aspect of the present disclosure, there proposes a method performed by a second network function implementing a Network Repository Function (NRF). The method comprises receiving, from a first network function implementing a service consumer, a discovery request for discovering one or more third network functions implementing service producers. The discovery request includes one or more query parameters and a preference indication indicating whether one or more combined third network functions or one or more standalone third network functions (103) are preferred. The method further comprises transmitting, to the first network function, a discovery response including information about the discovered one or more third network functions, wherein the discovered one or more third network functions are provided based on the preference indication and the one or more query parameters. If there is a preferred third network function registered at the second network function but not matching the one or more query parameters, the discovered one or more third network functions comprise one or more non-preferred third network functions matching the one or more query parameters. The discovery response further includes a match indication for indicating whether the discovered one or more third network functions match the preference indication.

In some embodiments, there proposes a network function implementing a service consumer. In an embodiment, the network function comprises at least one processor; and a non-transitory computer readable medium coupled to the at least one processor. The non-transitory computer readable medium may contain instructions executable by the at least one processor, whereby the at least one processor may be configured to perform the method according to the first aspect or the second aspect of the present disclosure. In an embodiment, the network function may be configured as the first network function or the second network function.

With the embodiments herein, the combined PGW-C+SMF and/or standalone SMF with priority may be presented in the query results for service provider/producer, and may reduce the processing time of both service consumer and the NRF.

### Brief Description of the Drawings

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements, and in which:
Figure 1 is a schematic block diagram showing example architecture for 5G network architecture at non-roaming scenario;
Figure 2 is a schematic signaling chart showing the messages in an example preferred service provider/producer query procedure;
Figure 3 is a schematic signaling chart showing the messages in a detailed example preferred SMF query procedure;
Figure 4 is a schematic flow chart showing an example method in the first network function, according to the embodiments herein;
Figure 5 is a schematic flow chart showing an example method in the second network function, according to the embodiments herein;
Figure 6 is a schematic block diagram showing an example first network function, according to the embodiments herein;
Figure 7 is a schematic block diagram showing an example second network function, according to the embodiments herein;
Figure 8 is a schematic block diagram showing an example computer-implemented apparatus, according to the embodiments herein.

### Detailed Description of Embodiments

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other.

Reference to "one embodiment" or "an embodiment" means that a particular feature, structure or characteristic described in connection with the embodiment is included in at least one embodiment. Thus, the appearances of the phrase "in an embodiment" appearing in various places throughout the specification are not necessarily all referring to the same embodiment.

The term "A, B, or C" used herein means "A" or "B" or "C"; the term "A, B, and C" used herein means "A" and "B" and "C"; the term "A, B, and/or C" used herein means "A" , "B", "C", "A and B", "A and C" , "B and C" or "A, B, and C".

It should also be understood that, a network node (such as the AMF 101, the NRF 102, and the SMF 103), which also may be referred as a network function, can be implemented either as a network element on a dedicated hardware, as a software instance running on a dedicated hardware, or as a virtualized function instantiated on an appropriate platform, e.g. on a cloud infrastructure.

In an embodiment, the wireless communication system 100 may be configured in an OTT scenario. The OTT connection may be transparent in the sense that the participating communication devices through which the OTT connection passes are unaware of routing of uplink and downlink communications. For example, a base station may not or need not be informed about the past routing of an incoming downlink communication with data originating from the network functions (such as the AMF 101, the NRF 102, and the SMF 103) in the core network to be forwarded (e.g., handed over) to a connected UE. Similarly, the base station need not be aware of the future routing of an outgoing uplink communication originating from the UE towards the network functions (such as the AMF 101, the NRF 102, and the SMF 103) in the core network.

In 3GPP TS 29.510 V17.3.0 (2021-09) (Network Function Repository Services), the query parameter "PGW-ind" is provided for querying the combined PGW-C+SMF(s) during the PDU session establishment procedure, to keep the PDU session continuity in 4G/5G interworking. When present, this information element "PGW-ind" with Boolean type may indicate whether a combined PGW-C+SMF or a standalone SMF is to be discovered.

If the AMF 101 sets PGW-ind to "true" and send it in SMF discovery request to the NRF 102, then the NRF 102 will only respond with SMF(s) 103 which is/are combined PGW-C+SMF node(s).

Else if the AMF 101 sets PGW-ind to "false" and send it in SMF discovery request to the NRF 102, then the NRF 102 will only respond with SMF(s) 103 which is/are standalone SMF node(s).

Else if the AMF 101 does not include PGW-ind as query parameter (PGW-ind value is null), then both combined PGW-C+SMF(s) and standalone SMF(s) are returned to the AMF 101, and the combined PGW-C+SMF(s) and standalone SMF(s) are mixed with each other.

That is, if the query parameter "PGW-ind" is used, either combined PGW-C+SMF or standalone SMF is returned to the AMF 101 from the NRF 102; if the query parameter "PGW-ind" is not used, mixed combined PGW-C+SMF and standalone SMF are returned to the AMF 101 from the NRF 102.

However, there is no query parameter to indicate the NRF 102 to prioritize combined PGW-C+SMF or standalone SMF from all candidates and respond the sorted candidate list to the AMF 101 during PDU session establishment procedure. In addition, if the "PGW-ind" is set to "true" but no combined PGW-C+SMF network function is discovered, the NRF 102 will not return any standalone SMF network function to the AMF 101; similarly, if the "PGW-ind" is set to "false" but no standalone SMF network function is discovered, the NRF 102 will not return any combined PGW-C+SMF network function to the AMF 101.

In view of deficiencies with the information element "PGW-ind", the embodiments propose a new information element in Nnrf_NFDiscovery service, to indicate the NRF 102 to prioritize for example combined PGW-C+SMF or standalone SMF from all candidates and respond them to service consumer in sequence. The new information element may be used as an addition to current parameter "PGW-ind" for querying combined PGW-C+SMF or standalone SMF in SMF discovery service; and may provide different and flexible discovery methods to service consumer.

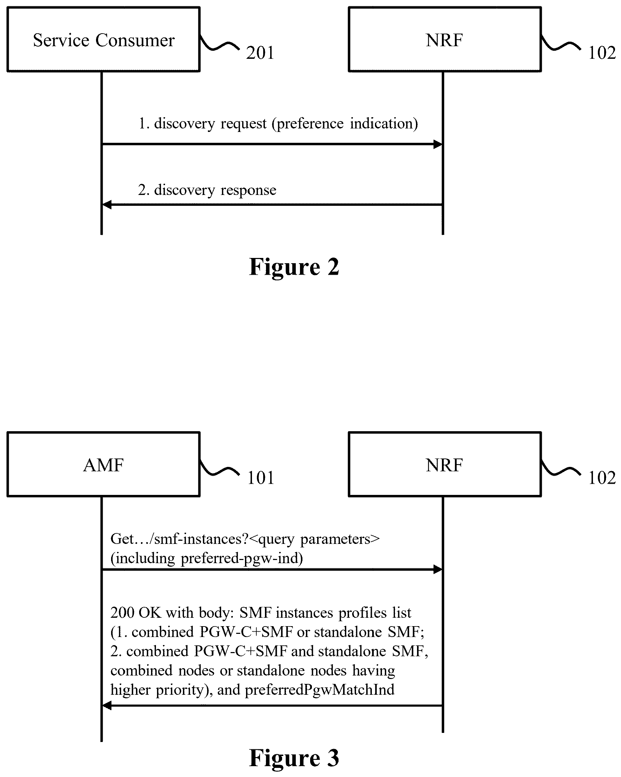

Figure 2 is a schematic signaling chart showing the messages in an example preferred service provider/producer query procedure, which is used to query the preferred service provider/producer (not shown).

As shown in Figure 2, the service consumer 201 may transmit a discovery request to the NRF 102, for discovering one or more network functions implementing service producers. The discovery request may include a preference indication for indicating whether combined network function(s) (for 4G/5G interworking, for example) or standalone network functions (for 5G, for example) are preferred, in addition to other query parameter(s).

In response to the discovery request, the NRF 102 may discover several network function(s) according to the preference indication and other query parameter(s), and respond with the preferred network function(s).

The embodiments will be explained below by referring to a detailed example preferred SMF query procedure. Figure 3 is a schematic signaling chart showing the messages in the detailed example preferred SMF query procedure.

As shown in Figure 3, the AMF 101, as service consumer, may transmit a discovery request of Nnrf_NFDiscovery_NFDiscover service operation (for example, the shown "Get" message) to the NRF 102, for discovering one or more SMFs, which may be used as service providers/producers in a subsequent PDU session establishment procedure.

The discovery request may include a new information element "preferred-pwg-ind" as a new query parameter, for indicating whether combined the combined PGW-C+SMF(s) or standalone SMF(s) are preferred for the AMF 101, in addition to other SMF query parameters. The combined PGW-C+SMF may use PGW-C and SMF for 4G and 5G session respectively, and thus may keep the PDU session continuity in 4G/5G interworking. The standalone SMF may provide service for 5G session, for example.

Regarding the SMF query parameters, which are sent to the NRF 102 from the AMF 101 during the PDU session establishment procedure, the basic query parameters may be DNN and S-NSSAI. Besides the DNN and S-NSSAI, there may be some other optional parameters, for example preferred-TAI, TAI, preferred locality, PGW indication, etc.

In response to the discovery request, the NRF 102 may discover several SMF(s) 103 according to the preference indication and other query parameter(s), and respond with the preferred SMF(s). In the discovery response, the combined PGW-C+SMF(s) or standalone SMF(s) are prioritized according to the value of "preferred-pwg-ind".

There are several examples for indicating the preferred SMF(s).

As a first example, the discovery request may include the following parameters in the following table 1.

**Table 1: URI query parameters supported by the GET method on this resource**

| **Name** | **Data type** | **P** | **Cardi nality** | **Description** |
|---|---|---|---|---|
| target-nf-type | NFType | M | 1 | This IE shall contain the NF type of the target NF being discovered. |
| requester-nf-type | NFType | M | 1 | This IE shall contain the NF type of the Requester NF that is invoking the Nnrf_NFDiscoverv service. |
| requester-nf-i nstance-id | Nflnstanceld | O | 0..1 | If included, this IE shall contain the NF instance id of the Requester NF. |
| pgw-ind | Boolean | O | 0..1 | When present, this IE indicates whether a combined SMF/PGW-C or a standalone SMF needs to be discovered. |
| | | | | true: A combined SMF/PGW-C is requested to be discovered; |
| | | | | false: A standalone SMF is requested to be discovered. |
| ... | ... | ... | ... | ... |
| preferred-pg w-ind | Boolean | O | 0..1 | When present, this IE indicates whether combined PGW-C+SMF(s) or standalone SMF(s) are preferred. |
| | | | | true: Combined PGW-C+SMF(s) are preferred to be discovered; |
| | | | | false: Standalone SMF(s) are preferred to be discovered. |

As shown in table 1, the new information element "preferred-pgw-ind" may be used to indicate whether combined PGW-C+SMF(s) or standalone SMF(s) are preferred to be discovered.

For example, if the AMF 101 sets "preferred-pgw-ind" as "true" (combined PGW-C+SMFs are preferred) and send it in the discovery request (for example, GET message) to the NRF 102, then the NRF 102 may check whether there are any PGW-C+SMF instances matching with the other query parameters and return the matched PGW-C+SMF instances. If no matching is found, the NRF 102 may return a list of standalone SMF instances matching the other query parameters.

For example, if the AMF 101 sets "preferred-pgw-ind" as "false" (standalone SMFs are preferred) and send it in the discovery request (for example, GET message) to the NRF 102, then the NRF 102 may check whether there are any standalone SMF instances matching with the other query parameters and return the matched standalone SMF instances. If no matching is found, the NRF 102 may return a list of PGW-C+SMF instances matching the other query parameters.

The response message may include the following parameters in the following table 2.

**Table 2: Definition of type PreferredSearch**

| **Attribute name** | **Data type** | **P** | **Cardinality** | **Description** |
|---|---|---|---|---|
| preferredTaiMatchInd | boolean | C | 0..1 | Indicates whether all the returned NFProfiles match or do not match the query parameter preferred-tai. |
| | | | | true: Match |
| | | | | false (default): Not Match |
| preferredFullPlmnMatch Ind | boolean | O | 0..1 | Indicates whether all the returned NFProfiles match or do not match the query parameter preferred-full-plmn. |
| | | | | true: Match |
| | | | | false (default): Not Match |
| preferredApiVersionsMa tchInd | boolean | O | 0..1 | Indicates whether the search result includes at least one NF Profile that matches all the preferred API versions indicated in the query parameter preferred-api-versions. |
| | | | | true: Match |
| | | | | false: Not Match |
| otherApiVersionslnd | boolean | O | 0..1 | This IE may be present if the preferred-api-versions query parameter is provided in the discovery request. |
| | | | | When present, this IE indicates whether there is at least one NF Profile with other API versions, i.e. that does not match all the preferred API versions indicated in the preferred-api-versions, returned in the response or not. |
| | | | | true: Returned |
| | | | | false: Not returned |
| ... | ... | ... | ... | ... |
| preferredPgwMatchInd | boolean | O | 0..1 | Indicates whether the search result includes at least one NFProfile that match the query parameter preferred-Pgw-Ind. |
| | | | | true: Match |
| | | | | false (default): Not Match |

As shown in table 2, the optional new information element "preferredPgwMatchInd" is used to indicate whether there is any matched SMF(s) in the response.

If the AMF 101 sets "preferred-pgw-ind" as "true" (combined PGW-C+SMFs are preferred), and the NRF 102 returns any PGW-C+SMF instance(s), then the information element "preferredPgwMatchInd" may be set as "true".

If the AMF 101 sets "preferred-pgw-ind" as "true" (combined PGW-C+SMFs are preferred), and the NRF 102 does not return any PGW-C+SMF instance(s), then the information element "preferredPgwMatchInd" may be set as "false".

If the AMF 101 sets "preferred-pgw-ind" as "false" (standalone SMFs are preferred), and the NRF 102 returns any standalone SMF instance(s), then the information element "preferredPgwMatchInd" may be set as "true".

If the AMF 101 sets "preferred-pgw-ind" as "false" (standalone SMFs are preferred), and the NRF 102 does not return any standalone SMF instance(s), then the information element "preferredPgwMatchInd" may be set as "false".

By using the optional information element "preferredPgwMatchInd", the AMF 101 may know whether the preferred SMF(s) are returned in the response, without further analyzing the returned SMF information (for example SMF address/endpoint).

As a second example, the discovery request may include the following parameters in the following table 3.

**Table 3: URI query parameters supported by the GET method on this resource**

| **Name** | **Data type** | **P** | **Cardi nality** | **Description** |
|---|---|---|---|---|
| target-nf-type | NFType | M | 1 | This IE shall contain the NF type of the target NF being discovered. |
| requester-nf-type | NFType | M | 1 | This IE shall contain the NF type of the Requester NF that is invoking the Nnrf_NFDiscoveryservice. |
| requester-nf-i nstance-id | Nflnstanceld | O | 0..1 | If included, this IE shall contain the NF instance id of the Requester NF. |
| pgw-ind | boolean | O | 0..1 | When present, this IE indicates whether a combined SMF/PGW-C or a standalone SMF needs to be discovered. |
| | | | | true: A combined SMF/PGW-C is requested to be discovered; |
| | | | | false: A standalone SMF is requested to be discovered. |
| ... | ... | ... | ... | ... |
| preferred-pg w-ind | boolean | O | 0..1 | When present, this IE indicates whether a combined SMF/PGW-C has prior to a standalone SMF in the discovered result. |
| | | | | true: combined SMF/PGW-C is given with higher priority and returned in the front of candidate list which includes both combined SMF/PGW-C and standalone SMF; |
| | | | | false: standalone SMF is given with higher priority and returned in the front of candidate list which includes both combined SMF/PGW-C and standalone SMF; |

As shown in table 3, the new information element "preferred-pgw-ind" may be used to indicate whether combined PGW-C+SMF(s) or standalone SMF(s) are preferred to be presented.

For example, if the AMF 101 sets "preferred-pgw-ind" as "true" (combined PGW-C+SMFs are preferred) and send it in the discovery request (for example, GET message) to the NRF 102, then the NRF 102 may check whether there are any PGW-C+SMF instances or standalone SMF instances matching with the other query parameters. If there are PGW-C+SMF instances and standalone SMF instances matching with the other query parameters, the NRF 102 may return the matched PGW-C+SMF instances and standalone SMF instances, and prioritize the PGW-C+SMF instances. For example, the combined PGW-C+SMF instances are given with higher priority and/or returned in the front of candidate list. If there are PGW-C+SMF instances but no standalone SMF instance matching with the other query parameters, the NRF 102 may return a list of PGW-C+SMF instances. If there are standalone SMF instances but no PGW-C+SMF instance matching with the other query parameters, the NRF 102 may return a list of standalone SMF instances.

For example, if the AMF 101 sets "preferred-pgw-ind" as "false" (standalone SMFs are preferred) and send it in the discovery request (for example, GET message) to the NRF 102, then the NRF 102 may check whether there are any PGW-C+SMF instances or standalone SMF instances matching with the other query parameters. If there are PGW-C+SMF instances and standalone SMF instances matching with the other query parameters, the NRF 102 may return the matched PGW-C+SMF instances and standalone SMF instances, and prioritize the standalone SMF instances. For example, the standalone SMF instances are given with higher priority and/or returned in the front of candidate list. If there are PGW-C+SMF instances but no standalone SMF instance matching with the other query parameters, the NRF 102 may return a list of PGW-C+SMF instances. If there are standalone SMF instances but no PGW-C+SMF instance matching with the other query parameters, the NRF 102 may return a list of standalone SMF instances.

The response message may include the following parameters in the following table 4.

**Table 4: Definition of type PreferredSearch**

| **Attribute name** | **Data type** | **P** | **Cardinality** | **Description** |
|---|---|---|---|---|
| preferredTaiMatchInd | boolean | C | 0..1 | Indicates whether all the returned NFProfiles match or do not match the query parameter preferred-tai. |
| | | | | true: Match |
| | | | | false (default): Not Match |
| preferredFullPlmnMatch Ind | boolean | O | 0..1 | Indicates whether all the returned NFProfiles match or do not match the query parameter preferred-full-plmn. |
| | | | | true: Match |
| | | | | false (default): Not Match |
| preferredApiVersionsMa tchInd | boolean | O | 0..1 | Indicates whether the search result includes at least one NF Profile that matches all the preferred API versions indicated in the query parameter preferred-api-versions. |
| | | | | true: Match |
| | | | | false: Not Match |
| otherApiVersionslnd | boolean | O | 0..1 | This IE may be present if the preferred-api-versions query parameter is provided in the discovery request. |
| | | | | When present, this IE indicates whether there is at least one NF Profile with other API versions, i.e. that does not match all the preferred API versions indicated in the preferred-api-versions, returned in the response or not. |
| | | | | true: Returned |
| | | | | false: Not returned |
| ... | ... | ... | ... | ... |
| preferredPgwMatchInd | boolean | O | 0..1 | Indicates whether the search result includes at least one NFProfile that match the query parameter preferred-Pgw-Ind. |
| | | | | true: Match |
| | | | | false (default): Not Match |

As shown in table 4, the optional new information element "preferredPgwMatchInd" is used to indicate whether there is any matched SMF(s) in the response.

If the AMF 101 sets "preferred-pgw-ind" as "true" (combined PGW-C+SMFs are preferred), and the NRF 102 returns any PGW-C+SMF instance(s), then the information element "preferredPgwMatchInd" may be set as "true".

If the AMF 101 sets "preferred-pgw-ind" as "true" (combined PGW-C+SMFs are preferred), and the NRF 102 does not return any PGW-C+SMF instance(s), then the information element "preferredPgwMatchInd" may be set as "false".

If the AMF 101 sets "preferred-pgw-ind" as "false" (standalone SMFs are preferred), and the NRF 102 returns any standalone SMF instance(s), then the information element "preferredPgwMatchInd" may be set as "true".

If the AMF 101 sets "preferred-pgw-ind" as "false" (standalone SMFs are preferred), and the NRF 102 does not return any standalone SMF instance(s), then the information element "preferredPgwMatchInd" may be set as "false".

By using the optional information element "preferredPgwMatchInd", the AMF 101 may know whether the preferred SMF(s) are returned in the response, without further analyzing the returned SMF information (for example SMF address/endpoint).

As a third example, the discovery request may include the following parameters in the following table 5.

**Table 5: URI query parameters supported by the GET method on this resource**

| **Name** | **Data type** | **P** | **Cardi nality** | **Description** |
|---|---|---|---|---|
| target-nf-type | NFType | M | 1 | This IE shall contain the NF type of the target NF being discovered. |
| requester-nf-type | NFType | M | 1 | This IE shall contain the NF type of the Requester NF that is invoking the Nnrf_NFDiscoverv service. |
| requester-nf-i nstance-id | Nflnstanceld | O | 0..1 | If included, this IE shall contain the NF instance id of the Requester NF. |
| pgw-ind | boolean | O | 0..1 | When present, this IE indicates whether a combined SMF/PGW-C or a standalone SMF needs to be discovered. |
| | | | | true: Combined PGW-C+SMF(s) are preferred to be discovered; |
| | | | | false: Standalone SMF(s) are preferred to be discovered.(Note) |
| ... | ... | ... | ... | ... |

As shown in table 5, the legacy information element "pgw-ind" may be overwrote to indicate whether combined PGW-C+SMF(s) or standalone SMF(s) are preferred to be discovered.

For example, if the AMF 101 sets "pgw-ind" as "true" (combined PGW-C+SMFs are preferred) and send it in the discovery request (for example, GET message) to the NRF 102, then the NRF 102 may check whether there are any PGW-C+SMF instances matching with the other query parameters and return the matched PGW-C+SMF instances. If no matching is found, the NRF 102 may return a list of standalone SMF instances matching the other query parameters.

For example, if the AMF 101 sets "pgw-ind" as "false" (standalone SMFs are preferred) and send it in the discovery request (for example, GET message) to the NRF 102, then the NRF 102 may check whether there are any standalone SMF instances matching with the other query parameters and return the matched standalone SMF instances. If no matching is found, the NRF 102 may return a list of PGW-C+SMF instances matching the other query parameters.

The response message may include the following parameters in the following table 6.

**Table 6: Definition of type PreferredSearch**

| **Attribute name** | **Data type** | **P** | **Cardinality** | **Description** |
|---|---|---|---|---|
| preferredTaiMatchInd | Boolean | C | 0..1 | Indicates whether all the returned NFProfiles match or do not match the query parameter preferred-tai. |
| | | | | true: Match |
| | | | | false (default): Not Match |
| preferredFullPlmnMatch Ind | Boolean | O | 0..1 | Indicates whether all the returned NFProfiles match or do not match the query parameter preferred-full-plmn. |
| | | | | true: Match |
| | | | | false (default): Not Match |
| preferredApiVersionsMa tchInd | Boolean | O | 0..1 | Indicates whether the search result includes at least one NF Profile that matches all the preferred API versions indicated in the query parameter preferred-api-versions. |
| | | | | true: Match |
| | | | | false: Not Match |
| otherApiVersionslnd | Boolean | O | 0..1 | This IE may be present if the preferred-api-versions query parameter is provided in the discovery request. |
| | | | | When present, this IE indicates whether there is at least one NF Profile with other API versions, i.e. that does not match all the preferred API versions indicated in the preferred-api-versions, returned in the response or not. |
| | | | | true: Returned |
| | | | | false: Not returned |
| ... | ... | ... | ... | ... |
| preferredPgwMatchInd | Boolean | O | 0..1 | Indicates whether the search result includes at least one NFProfile that match the query parameter preferred-Pgw-Ind. |
| | | | | true: Match |
| | | | | false (default): Not Match |

As shown in table 6, the optional new information element "preferredPgwMatchInd" is used to indicate whether there is any match SMF(s) in the response.

If the AMF 101 sets "pgw-ind" as "true" (combined PGW-C+SMFs are preferred), and the NRF 102 returns any PGW-C+SMF instance(s), then the information element "preferredPgwMatchInd" may be set as "true".

If the AMF 101 sets "pgw-ind" as "true" (combined PGW-C+SMFs are preferred), and the NRF 102 does not return any PGW-C+SMF instance(s), then the information element "preferredPgwMatchInd" may be set as "false".

If the AMF 101 sets "pgw-ind" as "false" (standalone SMFs are preferred), and the NRF 102 returns any standalone SMF instance(s), then the information element "preferredPgwMatchInd" may be set as "true".

If the AMF 101 sets "pgw-ind" as "false" (standalone SMFs are preferred), and the NRF 102 does not return any standalone SMF instance(s), then the information element "preferredPgwMatchInd" may be set as "false".

By using the optional information element "preferredPgwMatchInd", the AMF 101 may know whether the preferred SMF(s) are returned in the response, without further analyzing the returned SMF information (for example SMF address/endpoint).

By comparing with information element "PGW-ind" in current protocol, the above examples may achieve the following benefits.
(1) If the current information element "PGW-ind" is set to "true" (or "false"), then the NRF 102 will return to the AMF 101 with only combined PGW-C+SMF (or with only standalone SMF) accordingly. That is, if there is no matched combined PGW-C+SMF (or standalone SMF), the NRF 102 will not respond with a standalone SMF (or combined PGW-C+SMF). Then, the AMF 101 has to do a second round of query with different value of "PGW-ind" to the NRF 102 if needed, in order to avoid PDU session setup failed.

By using the above proposed examples herein, both combined PGW-C+SMF and standalone SMF can be responded from the NRF 102 at one time, or either combined PGW-C+SMF or standalone SMF will be responded, and one kind of nodes has higher priority. That is, if there is no matched combined PGW-C+SMF (or standalone SMF), the NRF 102 will respond with a standalone SMF (or combined PGW-C+SMF) instead. Therefore, the proposed examples herein do not need a second round of query.

(2) If the current information element "PGW-ind" is not used, then the NRF 102 will return to the AMF 101 with both the combined PGW-C+SMF and standalone SMF mixed with each other. Then the AMF 101 has to do internal filtering to prioritize for example the combined PGW-C+SMF nodes based on the NRF discovery result, to find out for example a combined node.

By using the above proposed examples herein, the NRF 102 may perform the ranking work, and the combined PGW-C+SMF (or standalone SMF) may have higher priority. Then, the network function service consumer (for example the AMF 101) just respects the priority of each candidate from the NRF 102 to select the SMF(s), there is no need to perform an extra internal filtering in the AMF 101.

(3) If the current information element "PGW-ind" is not used, then the NRF 102 will return to the AMF 101 with both the combined PGW-C+SMF and standalone SMF mixed with each other. As a result, if the number of SMF candidates is too large, not all SMF candidates may be returned in one discovery. Then, the AMF 101 may not obtain an optimal combined PGW-C+SMF (or standalone SMF).

By using the above proposed examples herein, the NRF 102 may prioritize the combined PGW-C+SMF nodes (or standalone SMF nodes) in the returned result. As a result, if the number of SMF candidates is too large, the NRF 102 will prioritize the return of the preferred combined PGW-C+SMF nodes (or standalone SMF nodes). Therefore, the AMF 101 may obtain for example an optimal combined PGW-C+SMF with a higher probability, for 4G-5G interworking.

Therefore, with the embodiments herein, the combined PGW-C+SMF and/or standalone SMF with priority may be presented in the query results for service provider/producer, and may reduce the processing time of both service consumer and the NRF.

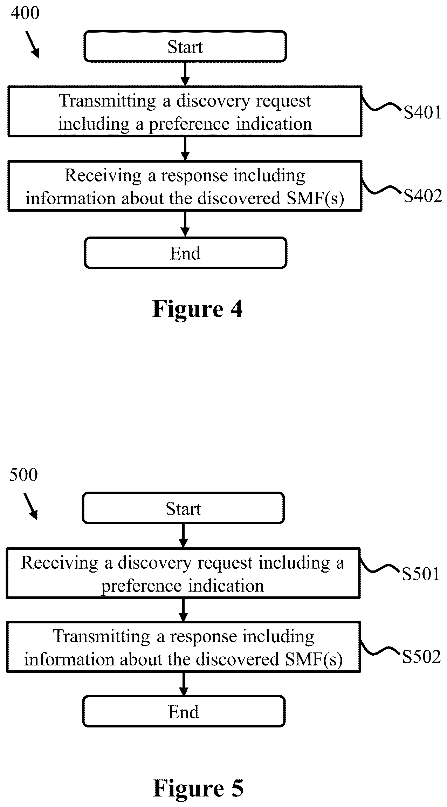

The embodiments of this disclosure will be further explained by referring to the flow charts of for example Figure 4 and Figure 5. Figure 4 is a schematic flow chart showing an example method 400 in the first network function, according to the embodiments herein.

The method 400 may begin with step S401, in which the first network function (for example the AMF 101, the service consumer 201) may transmit, to a second network function implementing a NRF (for example the NRF 102), a discovery request for discovering one or more third network functions implementing service producers. The discovery request may include a preference indication for indicating whether one or more combined third network functions or one or more standalone third network functions are preferred, as shown in the above Figures 2 and 3.

In an embodiment, the preference indication may indicate whether one or more combined third network functions or one or more standalone third network functions are preferred to be discovered, as shown in the above first example and third example.

In an embodiment, the preference indication may indicate whether one or more combined third network functions or one or more standalone third network functions are preferred to be presented, as shown in the above second example.

In an embodiment, the preference indication may be represented by an information element preferred PGW indication (preferred-pgw-ind) as shown in the above first example or an information element PGW indication (pgw-ind) as shown in the above third example.

In an embodiment, the discovery request may further include information elements of DNN and SNSSAI. In an embodiment, the discovery request may further include information elements of one or more of TAI, preferred TAI, and preferred locality.

In an embodiment, the discovery request may be a request of Nnrf_NFDiscovery_NFDiscover service operation during a PDU session establishment procedure.

In an embodiment, the first network function implementing service consumer may be an AMF, for example the AMF 101.

In an embodiment, the one or more third network functions implementing service producers may be one or more SMFs, for example the SMF 103.

In an embodiment, the one or more combined third network functions implementing service producers may be one or more PGW-C+SMFs, for 4G/5G interworking.

In an embodiment, the one or more standalone third network functions implementing service producers may be one or more standalone SMFs for 5G.

Then, the method 400 may proceed to step S402, in which the first network function may receive, from the second network function, a discovery response including information about the discovered one or more third network functions (for example address/endpoint of the discovered combined PGW-C+SMF nodes or standalone SMF nodes). The discovered one or more third network functions may be provided based on the preference indication by the second network function.

In an embodiment, if there is no preferred third network function discovered, the discovery response including information about discovered one or more non-preferred third network functions.

In an embodiment, when one or more combined third network functions are preferred to be discovered: if one or more combined third network functions are discovered, the discovery response may include information about the discovered one or more combined third network functions, as shown in the above first example and third example.

In an embodiment, when one or more combined third network functions are preferred to be discovered: if one or more standalone third network functions are discovered but no combined third network function is discovered, the discovery response may include information about the discovered one or more standalone third network functions, as shown in the above first example and third example.

In an embodiment, when one or more standalone third network functions are preferred to be discovered: if one or more standalone third network functions are discovered, the discovery response may include information about the discovered one or more standalone third network function, as shown in the above first example and third example.

In an embodiment, when one or more standalone third network functions are preferred to be discovered: if one or more combined third network functions are discovered but no standalone third network function is discovered, the discovery response may include information about the discovered one or more combined third network functions, as shown in the above first example and third example.

In an embodiment, when one or more combined third network functions are preferred to be presented: if both one or more combined third network functions and one or more standalone third network functions are discovered, the discovery response may include information about the discovered one or more combined third network functions and information about the discovered one or more standalone third network functions. In addition, the information about the discovered one or more combined third network functions may be presented with higher priority than the one or more standalone third network functions, as shown in the above second example.

In an embodiment, when one or more combined third network functions are preferred to be presented: if one or more combined third network functions are discovered but no standalone third network function is discovered, the discovery response may include information about the discovered one or more combined third network functions, as shown in the above second example.

In an embodiment, when one or more combined third network functions are preferred to be presented: if one or more standalone third network functions are discovered but no combined third network function is discovered, the discovery response may include information about the discovered one or more standalone third network functions, as shown in the above second example.

In an embodiment, when one or more standalone third network functions are preferred to be presented: if both one or more combined third network functions and one or more standalone third network functions are discovered, the discovery response may include information about the discovered one or more combined third network functions and information about the discovered one or more standalone third network functions. In addition, the information about the standalone one or more combined third network functions may be presented with higher priority than the one or more combined third network functions, as shown in the above second example.

In an embodiment, when one or more standalone third network functions are preferred to be presented: if one or more standalone third network functions are discovered but no combined third network function is discovered, the discovery response may include information about the discovered one or more standalone third network functions, as shown in the above second example.

In an embodiment, when one or more standalone third network functions are preferred to be presented: if one or more combined third network functions are discovered but no standalone third network function is discovered, the discovery response may include information about the discovered one or more combined third network functions, as shown in the above second example.

In an embodiment, the discovery response may further include a match indication for indicating whether the discovery response includes information matching with the preferred one or more third network functions, as shown in the above first, second, or third example.

In an embodiment, the match indication may be represented by an information element preferred PGW match indication (preferredPgwMatchInd), as shown in the above first, second, or third example.

In an embodiment, the discovery response may be a response of Nnrf_NFDiscovery_NFDiscover service operation during a PDU session establishment procedure.

Although not shown in Figure 4, the first network function may obtain respective service from the combined network function or standalone network function. For example, the AMF 101, as the first network function, may select a SMF node from the returned SMF node(s), and then establish a PDU session.

The above steps are only examples, and the first network function may perform any actions described with respect to Figures 2-3, to allow the prioritization of the combined network function or standalone network function.

Figure 5 is a schematic flow chart showing an example method 500 in the second network function, according to the embodiments herein.

The method 500 may begin with step S501, in which the second network function (for example the NRF 102) may receive, from a first network function implementing a service consumer (for example the AMF 101, the service consumer 201), a discovery request for discovering one or more third network functions implementing service producers. The discovery request may include a preference indication for indicating whether one or more combined third network functions or one or more standalone third network functions are preferred, as shown in the above Figures 2 and 3.

In an embodiment, the preference indication may indicate whether one or more combined third network functions or one or more standalone third network functions are preferred to be discovered, as shown in the above first example and third example.

In an embodiment, the preference indication may indicate whether one or more combined third network functions or one or more standalone third network functions are preferred to be presented, as shown in the above second example.

In an embodiment, the preference indication may be represented by an information element preferred PGW indication (preferred-pgw-ind) as shown in the above first example or an information element PGW indication (pgw-ind) as shown in the above third example.

In an embodiment, the discovery request may further include information elements of DNN and SNSSAI. In an embodiment, the discovery request may further include information elements of one or more of TAI, preferred TAI, and preferred locality.

In an embodiment, the discovery request may be a request of Nnrf_NFDiscovery_NFDiscover service operation during a PDU session establishment procedure.

In an embodiment, the first network function implementing service consumer may be an AMF, for example the AMF 101.

In an embodiment, the one or more third network functions implementing service producers may be one or more SMFs, for example the SMF 103.

In an embodiment, the one or more combined third network functions implementing service producers may be one or more PGW-C+SMFs, for 4G/5G interworking.

In an embodiment, the one or more standalone third network functions implementing service producers may be one or more standalone SMFs for 5G.

Then, the method 500 may proceed to step S502, in which the second network function may transmit, to the first network function, a discovery response including information about the discovered one or more third network functions (for example address/endpoint of the discovered combined PGW-C+SMF nodes or standalone SMF nodes). The discovered one or more third network functions may be provided based on the preference indication by the second network function.

In an embodiment, if there is no preferred third network function discovered, the discovery response including information about discovered one or more non-preferred third network functions.

For example the second network function may perform a search based on the query parameters sent from the first network function, and discover combined network function(s) and/or standalone network function(s). Then the second network function may respond to the first network function with the discovered network function(s) based on the preference indication.

In an embodiment, when one or more combined third network functions are preferred to be discovered: if one or more combined third network functions are discovered, the discovery response may include information about the discovered one or more combined third network functions, as shown in the above first example and third example.

In an embodiment, when one or more combined third network functions are preferred to be discovered: if one or more standalone third network functions are discovered but no combined third network function is discovered, the discovery response may include information about the discovered one or more standalone third network functions, as shown in the above first example and third example.

In an embodiment, when one or more standalone third network functions are preferred to be discovered: if one or more standalone third network functions are discovered, the discovery response may include information about the discovered one or more standalone third network function, as shown in the above first example and third example.

In an embodiment, when one or more standalone third network functions are preferred to be discovered: if one or more combined third network functions are discovered but no standalone third network function is discovered, the discovery response may include information about the discovered one or more combined third network functions, as shown in the above first example and third example.

In an embodiment, when one or more combined third network functions are preferred to be presented: if both one or more combined third network functions and one or more standalone third network functions are discovered, the discovery response may include information about the discovered one or more combined third network functions and information about the discovered one or more standalone third network functions. In addition, the information about the discovered one or more combined third network functions may be presented with higher priority than the one or more standalone third network functions, as shown in the above second example.

In an embodiment, when one or more combined third network functions are preferred to be presented: if one or more combined third network functions are discovered but no standalone third network function is discovered, the discovery response may include information about the discovered one or more combined third network functions, as shown in the above second example.

In an embodiment, when one or more combined third network functions are preferred to be presented: if one or more standalone third network functions are discovered but no combined third network function is discovered, the discovery response may include information about the discovered one or more standalone third network functions, as shown in the above second example.

In an embodiment, when one or more standalone third network functions are preferred to be presented: if both one or more combined third network functions and one or more standalone third network functions are discovered, the discovery response may include information about the discovered one or more combined third network functions and information about the discovered one or more standalone third network functions. In addition, the information about the standalone one or more combined third network functions may be presented with higher priority than the one or more combined third network functions, as shown in the above second example.

In an embodiment, when one or more standalone third network functions are preferred to be presented: if one or more standalone third network functions are discovered but no combined third network function is discovered, the discovery response may include information about the discovered one or more standalone third network functions, as shown in the above second example.

In an embodiment, when one or more standalone third network functions are preferred to be presented: if one or more combined third network functions are discovered but no standalone third network function is discovered, the discovery response may include information about the discovered one or more combined third network functions, as shown in the above second example.

In an embodiment, the discovery response may further include a match indication for indicating whether the discovery response includes information matching with the preferred one or more third network functions, as shown in the above first, second, or third example.

In an embodiment, the match indication may be represented by an information element preferred PGW match indication (preferredPgwMatchInd), as shown in the above first, second, or third example.

In an embodiment, the discovery response may be a response of Nnrf_NFDiscovery_NFDiscover service operation during a PDU session establishment procedure.

The above steps are only examples, and the first network function may perform any actions described with respect to Figures 2-3, to allow the prioritization of the combined network function or standalone network function.

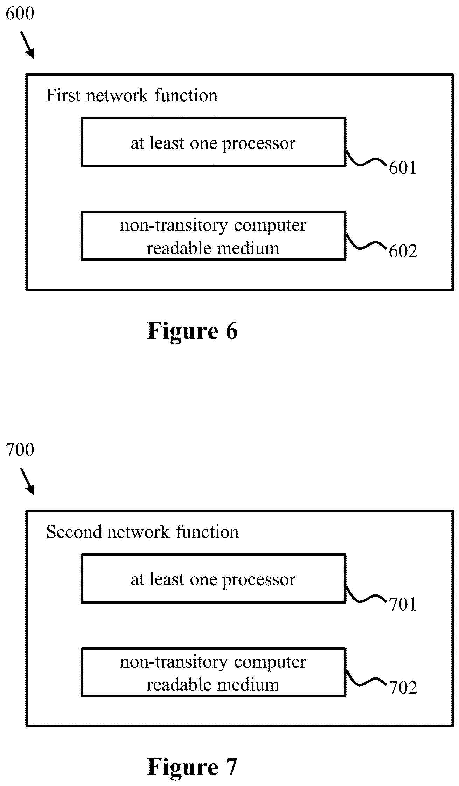

Figure 6 is a schematic block diagram showing an example first network function 600, which may be configured to either the AMF 101 or the service consumer 201, according to the embodiments herein.

In an embodiment, the first network function 600 may include at least one processor 601; and a non-transitory computer readable medium 602 coupled to the at least one processor 601. The non-transitory computer readable medium 602 may contain instructions executable by the at least one processor 601, whereby the at least one processor 601 may be configured to perform the steps in the example method 400 as shown in the schematic flow chart of Figure 4; the details thereof are omitted here.

Note that, the first network function 600 may be implemented as hardware, software, firmware and any combination thereof. For example, the first network function 600 may include a plurality of units, circuities, modules or the like, each of which may be used to perform one or more steps of the example method 400 or one or more steps related to the AMF 101 or the service consumer 201.

It should be understood that, the first network function 600 may be implemented either as a network element on a dedicated hardware, as a software instance running on a dedicated hardware, or as a virtualized function instantiated on an appropriate platform, e.g. on a cloud infrastructure.

Figure 7 is a schematic block diagram showing an example second network function 700, which may be configured to the NRF 102, according to the embodiments herein.

In an embodiment, the second network function 700 may include at least one processor 701; and a non-transitory computer readable medium 702 coupled to the at least one processor 701. The non-transitory computer readable medium 702 may contain instructions executable by the at least one processor 701, whereby the at least one processor 701 may be configured to perform the steps in the example method 500 as shown in the schematic flow chart of Figure 5; the details thereof are omitted here.

Note that, the second network function 700 may be implemented as hardware, software, firmware and any combination thereof. For example, the second network function 700 may include a plurality of units, circuities, modules or the like, each of which may be used to perform one or more steps of the example method 500 or one or more steps related to the NRF 102.

It should be understood that, the second network function 700 may be implemented either as a network element on a dedicated hardware, as a software instance running on a dedicated hardware, or as a virtualized function instantiated on an appropriate platform, e.g. on a cloud infrastructure.

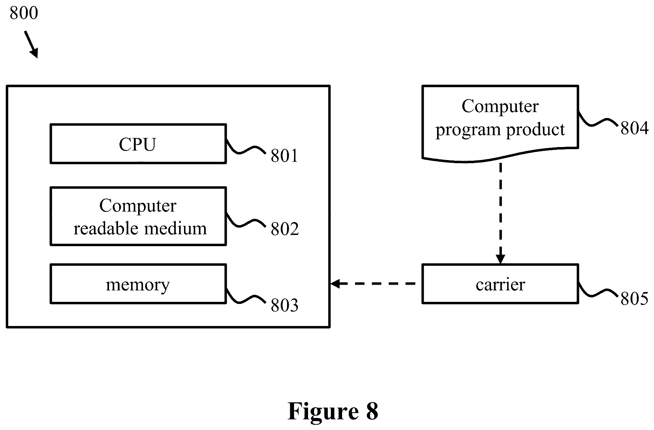

Figure 8 is a schematic block diagram showing an example computer-implemented apparatus 800, according to the embodiments herein. In an embodiment, the apparatus 800 may be configured as the above mentioned apparatus, such as the AMF 101, the service consumer 201, the NRF 102, or the network functions 600 and 70.

In an embodiment, the apparatus 800 may include but not limited to at least one processor such as Central Processing Unit (CPU) 801, a computer-readable medium 802, and a memory 803. The memory 803 may comprise a volatile (e.g., Random Access Memory, RAM) and/or non-volatile memory (e.g., a hard disk or flash memory). In an embodiment, the computer-readable medium 802 may be configured to store a computer program and/or instructions, which, when executed by the processor 801, causes the processor 801 to carry out any of the above mentioned methods.

In an embodiment, the computer-readable medium 802 (such as non-transitory computer readable medium) may be stored in the memory 803. In another embodiment, the computer program may be stored in a remote location for example computer program product 804 (also may be embodied as computer-readable medium), and accessible by the processor 801 via for example carrier 805.

The computer-readable medium 802 and/or the computer program product 804 may be distributed and/or stored on a removable computer-readable medium, e.g. diskette, CD (Compact Disk), DVD (Digital Video Disk), flash or similar removable memory media (e.g. compact flash, SD (secure digital), memory stick, mini SD card, MMC multimedia card, smart media), HD-DVD (High Definition DVD), or Blu-ray DVD, USB (Universal Serial Bus) based removable memory media, magnetic tape media, optical storage media, magneto-optical media, bubble memory, or distributed as a propagated signal via a network (e.g. Ethernet, ATM, ISDN, PSTN, X.25, Internet, Local Area Network (LAN), or similar networks capable of transporting data packets to the infrastructure node).

Furthermore, the following amendments are proposed to amend the current 3GPP Technical Specification 3GPP TS 29.510 V17.3.0.

### Title: Preferred PGW Query Parameter

### Reason for change:

3GPP TS 29.510 has specified that AMF discovers combined PGW-C+SMF for PDU session with EPS/5GS interworking possibility during PDU session establishment procedure using "pgw-ind" query parameter.

| | | | | |
|---|---|---|---|---|
| pgw-ind | boolean | O | 0..1 | When present, this IE indicates whether a combined SMF/PGW-C or a standalone SMF needs to be discovered. |
| | | | | true: A combined SMF/PGW-C is requested to be discovered; |
| | | | | false: A standalone SMF is requested to be discovered. (See NOTE 2) |

If AMF set "pgw-ind" to "true" in discovery request the NRF will only return combined PGW-C+SMF(s), otherwise if set the value to "false" the NRF will only respond with SMFs which are standalone SMF nodes.

In real network deployments, for better user experience, when desired SMF instances are not available the AMF shall select another available SMF to continue the PDU session establishment, e.g. when a PDU session supports EPS/5GS interworking but there is no SMF-C+PGW is available at the moment, the AMF shall still setup the PDU session with an available standalone SMF. To do so, the AMF will need to send a subsequent discovery request by setting the "pgw-ind" to opposite value to find the available alternative SMF(s). This increase the complexity of the AMF and increase the network traffic and load on NRF. Furthermore, if the SMF discovery failed due to other query parameters (e.g. DNN/slice, i.e. there is no SMF can serve the DNN or slice), both discovery request will fail.

This CR propose preferred query parameters to find combined PGW-C+SMFs or standalone SMFs.

### Summary of change:

1/ Add new preferred query parameter
2/ Add new IE in PreferredSearch data type to indicate whether the preferred query parameter is matched or not.
3/ Add new query parameter in Feature "Query-SBIProtoc17"
4/ Update OpenAPI accordingly.

### Consequences if not approved:

During PDU session establishment the AMF may perform subsequent discovery for combined PGW-C+SMF/standalone SMF, which increase the AMF complexity and increase network traffic and NRF load.

### Other comments:

This CR introduces backward compatible new feature in OpenAPI file of Nnrf_NFDiscovery APIs.

### Proposed changes:

*** 1st Change *** (the underline indicates the content to be added to the 3GPP Technical Specification)

### 6.2.3.2.3.1 GET

This operation retrieves a list of NF Instances, and their offered services, currently registered in the NRF, satisfying a number of filter criteria, such as those NF Instances offering a certain service name, or those NF Instances of a given NF type (e.g., AMF).

**Table 6.2.3.2.3.1-1: URI query parameters supported by the GET method on this resource**

| **Name** | **Data type** | **P** | **Cardinality** | | **Applicability** |
|---|---|---|---|---|---|
| target-nf-type | NFType | M | 1 | | |
| requester-nf-type | NFType | M | 1 | | |
| preferred-collocated-nf-types | array(Collocated NfType) | O | 1..N | | Collocated-NF-Selection |
| requester-nf-instance-id | Nflnstanceld | O | 0..1 | | Query-Params-Ext2 |
| service-names | array(ServiceName) | O | 1..N | | |
| | | | | | |
| | | | | | |
| | | | | | |
| | | | | | |
| | | | | | |
| | | | | NF1 supports services: A, B, C | |
| | | | | NF2 supports services: C, D, E | |
| | | | | NF3 supports services: A, C, E | |
| | | | | NF4 supports services: B, C, D | |
| | | | | Consumer asks for service-names = [A, E] | |
| | | | | NRF returns: | |
| | | | | NF1 containing service A | |
| | | | | NF2 containing service E | |
| | | | | NF3 containing services A, E | |
| | | | | NF4 is not returned | |
| requester-nf-instance-fqdn | Fqdn | O | 0..1 | This IE may be present for an NF discovery request within the same PLMN as the NRF. | |
| | | | | If included, this IE shall contain the FQDN of the Requester NF that is invoking the Nnrf_NFDiscovery service. | |
| | | | | The NRF shall use this to return only those NF profiles that include at least one NF service containing an entry in the "allowedNfDomains" list (see clause 6.1.6.2.3) that matches the domain of the requester NF. | |
| | | | | This IE shall be ignored by the NRF if it is received from a requester NF belonging to a different PLMN. (NOTE 12) | |
| target-plmn-list | array(Plmnld) | C | 1..N | This IE shall be included when NF services in a different PLMN, or NF services of specific PLMN ID(s) in a same PLMN comprising multiple PLMN IDs, need to be discovered. When included, this IE shall contain the PLMN ID of the target NF. If more than one PLMN ID is included, NFs from any PLMN ID present in the list matches the query parameter. | |
| | | | | This IE shall also be included in SNPN scenarios, when the entity owning the subscription, the Credentials Holder (see clause 5.30.2.9 in 3GPP TS 23.501 [2]) is a PLMN. | |
| | | | | For inter-PLMN service discovery, at most 1 PLMN ID shall be included in the list; it shall be included in the service discovery from the NF in the source PLMN sent to the NRF in the same PLMN, while it may be absent in the service discovery request sent from the source NRF to the target NRF. In such case, if the NRF receives more than 1 PLMN ID, it shall only consider the first element of the array, and ignore the rest. | |
| requester-plmn-list | array(Plmnld) | C | 1..N | This IE shall be included when NF services in a different PLMN need to be discovered. It may be present when NF services in the same PLMN need to be discovered. When included, this IE shall contain the PLMN ID(s) of the requester NF. (NOTE 12) | |
| requester-snpn-list | array(PlmnldNid) | C | 1..N | This IE shall be included when the Requester NF belongs to one or several SNPNs, and NF services of a specific SNPN need to be discovered. | Query-Params-Ext2 |
| | | | | When present, this IE shall contain the SNPN ID(s) of the requester NF. | |
| | | | | The NRF shall use this to return only those NF profiles of NF Instances allowing to be discovered from the SNPNs identified by this IE, according to the "allowedSnpns" list in the NF Profile and NF Service (see clauses 6.1.6.2.2 and 6.1.6.2.3). | |
| target-nf-instance-id | Nflnstanceld | O | 0..1 | Identity of the NF instance being discovered. | |
| target-nf-fqdn | Fqdn | O | 0..1 | FQDN of the target NF instance being discovered. | |
| hnrf-uri | Uri | C | 0..1 | If included, this IE shall contain the API URI of the NFDiscovery Service (see clause 6.2.1) of the home NRF. It shall be included if the Requester NF has previously received such API URI to be used for service discovery (e.g., from the NSSF in the home PLMN as specified in clause 6.1.6.2.11 of 3GPP TS 29.531 [42]). | |
| snssais | array(Snssai) | O | 1..N | If included, this IE shall contain the list of S-NSSAls that are served by the NF (Service) Instances being discovered. The NRF shall return those NF profiles/NF services of NF (Service) Instances that have at least one of the S-NSSAIs in this list. The S-NSSAls included in the NF profiles/NF services of NF (Service) Instances returned by the NRF shall be an interclause of the S-NSSAIs requested and the S-NSSAIs supported by those NF (Service) Instances. (NOTE 10) When the NF Profile of the NF Instances being discovered has defined the list of supported S-NSSAls in the "perPlmnSnssaiList", the discovered NF Instances shall be those having any of the S-NSSAls included in this "snssais" parameter in any of the PLMNs included in the "target-plmn-list" attribute, if present; if the "target-plmn-list" is not included, the NRF shall assume that the discovery request is for any of the PLMNs it supports. | |
| requester-snssais | array(Snssai) | O | 1..N | If included, this IE shall contain the list of S-NSSAI of the requester NF. If this IE is included in a service discovery in a different PLMN, the requester NF shall provide S-NSSAI values of the target PLMN, that correspond to the S-NSSAI values of the requester NF. | |
| | | | | The NRF shall use this to return only those NF profiles of NF Instances allowing to be discovered from at least one network slice identified by this IE, according to the "allowedNssais" list in the NF Profile and NF Service (see clause 6.1.6.2.2 and 6.1.6.2.3). (NOTE 12) | |
| plmn-specific-snssai-list | array(PlmnSnssai) | O | 1..N | If included, this IE shall contain the list of S-NSSAI that are served by the NF service being discovered for the corresponding PLMN provided. The NRF shall use this to identify the NF services that have registered their support for the S-NSSAIs for the corresponding PLMN given. The NRF shall return the NF profiles that have at least one S-NSSAI supported in any of the PLMNs provided in this list. The per PLMN list of S-NSSAIs included in the NF profile returned by the NRF shall be an interclause of the list requested and the list registered in the NF profile. (NOTE 10). | |
| requester-plmn-specific-snssai-list | array(PlmnSnssai) | O | 1..N | If included, this IE shall contain the list of S-NSSAI of the requester NF, for each of the PLMNs it supports. The NRF shall use this to return only those NF profiles of NF Instances allowing to be discovered from at least one network slice identified by this IE, according to the "allowedNssais" and "allowedPlmns" attributes in the NF Profile and NF Service (see clause 6.1.6.2.2 and 6.1.6.2.3). (NOTE 12) | Query-Params-Ext3 |
| nsi-list | array(string) | O | 1..N | If included, this IE shall contain the list of NSI IDs that are served by the services being discovered. | |
| dnn | Dnn | O | 0..1 | If included, this IE shall contain the DNN for which NF services serving that DNN is discovered. DNN may be included if the target NF type is e.g. "BSF", "SMF", "PCF", "PCSCF", "UPF", "EASDF", "TSCTSF", "MB-UPF" or "MB-SMF". | |
| | | | | The DNN shall contain the Network Identifier and it may additionally contain an Operator Identifier. (NOTE 11). | |
| | | | | If the Snssai(s) are also included, the NF services serving the DNN shall be available in the network slice(s) identified by the Snssai(s). | |
| smf-serving-area | string | O | 0..1 | If included, this IE shall contain the serving area of the SMF. It may be included if the target NF type is "UPF". | |
| mbsmf-serving-area | string | O | 0..1 | If included, this IE shall contain the serving area of the MB-SMF. It may be included if the target NF type is "MB-UPF". | Query-MBS |
| tai | Tai | O | | Tracking Area Identity. | |
| amf-region-id | AmfRepionId | O | 0..1 0..1 | AMF Region Identity. | |
| amf-set-id | AmfSetId | O | 0..1 | AMF Set Identity. | |
| guami | Guami | O | 0..1 | Guami used to search for an appropriate AMF. | |
| | | | | (NOTE 1) | |
| supi | Supi | O | 0..1 | If included, this IE shall contain the SUPI of the requester UE to search for an appropriate NF. SUPI may be included if the target NF type is e.g. "PCF", "CHF", "AUSF", "BSF", "UDM" or "UDR". | |
| ue-ipv4-address | Ipv4Addr | O | 0..1 | The IPv4 address of the UE for which a BSF or P-CSCF needs to be discovered. | |
| ip-domain | string | O | 0..1 | The IPv4 address domain of the UE for which a BSF needs to be discovered. | |
| ue-ipv6-prefix | Ipv6Prefix | O | 0..1 | The IPv6 prefix of the UE for which a BSF or P-CSCF needs to be discovered. | |
| pgw-ind | boolean | O | 0..1 | When present, this IE indicates whether a combined SMF/PGW-C or a standalone SMF needs to be discovered. | |
| | | | | true: A combined SMF/PGW-C is requested to be discovered; false: A standalone SMF is requested to be discovered. (See NOTE 2) | |
| preferred-pqw-ind | boolean | O | 0..1 | When present, this IE indicates whether combined PGW-C+SMF(s) or standalone SMF(s) are preferred. | Query-SBIProtoc17 |
| | | | | true: Combined PGW-C+SMF(s) are preferred to be discovered: false: Standalone SMF(s) are preferred to be discovered (See NOTE 2, NOTE x) | |
| pgw | Fqdn | O | 0..1 | If included, this IE shall contain the PGW FQDN which is used by the AMF to find the combined SMF/PGW-C. | |
| pgw-ip | IpAddr | O | 0..1 | If included, this IE shall contain the PGW IP Address used by the AMF to find the combined SMF/PGW-C. | Query-SBIProtoc17 |
| gpsi | Gpsi | O | 0..1 | If included, this IE shall contain the GPSI of the requester UE to search for an appropriate NF. GPSI may be included if the target NF type is "CHF", "PCF", "BSF", "UDM" or "UDR". | |
| external-group-identity | ExtGroupld | O | 0..1 | If included, this IE shall contain the external group identifier of the requester UE to search for an appropriate NF. This may be included if the target NF type is "UDM", "UDR", "HSS" or "TSCTSF". | |
| pfd-data | PfdData | O | 0..1 | When present, this IE shall contain the application identifiers and/or application function identifiers in PFD management. This may be included if the target NF type is "NEF". | Query-Params-Ext2 |
| | | | | The NRF shall return those NEF instances which can provide the PFDs for at least one of the provided application identifiers, or for at least one of the provided application function identifiers. | |
| data-set | DataSetld | O | 0..1 | Indicates the data set to be supported by the NF to be discovered. May be included if the target NF type is "UDR". | |
| routing-indicator | string | O | 0..1 | Routing Indicator information that allows to route network signalling with SUCI (see 3GPP TS 23.003 [12]) to an AUSF, AAnF and UDM instance capable to serve the subscriber. May be included if the target NF type is "AUSF", "AANF" or "UDM". | |
| | | | | Pattern: "^[0-9]{1,4}$" | |
| group-id-list | array(NfGroupld) | O | 1..N | Identity of the group(s) of the NFs of the target NF type to be discovered. May be included if the target NF type is "UDR", "UDM", "HSS", "PCF", "AUSF", "BSF" or "CHF". | |
| dnai-list | array(Dnai) | O | 1..N | If included, this IE shall contain the Data network access identifiers. It may be included if the target NF type is "UPF", "SMF", "EASDF" or "NEF". | |
| upf-iwk-eps-ind | boolean | O | 0..1 | When present, this IE indicates whether a UPF supporting interworking with EPS needs to be discovered. | |
| | | | | true: A UPF supporting interworking with EPS is requested to be discovered; false: A UPF not supporting interworking with EPS is requested to be discovered. (NOTE 3) | |
| chf-supported-plmn | PlmnId | O | 0..1 | If included, this IE shall contain the PLMN ID that a CHF supports (i.e., in the PlmnRange of Chflnfo attribute in the NFProfile). This IE may be included when the target NF type is "CHF". | |
| preferred-locality | string | O | 0..1 | Preferred target NF location (e.g. geographic location, data center). | |
| | | | | When present, the NRF shall prefer NF profiles with a locality attribute that matches the preferred-locality. | |
| | | | | The NRF may return additional NFs in the response not matching the preferred target NF location, e.g. if no NF profile is found matching the preferred target NF location. | |
| | | | | The NRF should set a lower priority for any additional NFs on the response not matching the preferred target NF location than those matching the preferred target NF location. | |
| | | | | (NOTE 6) | |
| access-type | AccessType | C | 0..1 | If included, this IE shall contain the Access type which is required to be supported by the target Network Function (i.e. SMF). | |
| supported-features | Supported Features | O | 0..1 | List of features required to be supported by the target Network Function. | |
| | | | | This IE may be present only if the service-names attribute is present and if it contains a single service-name. It shall be ignored by the NRF otherwise. | |
| | | | | (NOTE 4) | |
| required-features | array( Supported Features) | O | 1..N | List of features required to be supported by the target Network Function, as defined by the supportedFeatures attribute in NFService (see clauses 6.1.6.2.3 and 6.2.6.2.4). | Query-Params-Ext1 |
| | | | | This IE may be present only if the service-names attribute is present. | |
| | | | | When present, the required-features attribute shall contain as many entries as the number of entries in the service-names attribute. The n^{th} entry in the required-features attribute shall correspond to the n^{th} entry in the service-names attribute. An entry corresponding to a service for which no specific feature is required shall be encoded as "0". | |
| complex-query | ComplexQuery | O | 0..1 | This query parameter is used to override the default logical relationship of query parameters. | Complex-Query |
| limit | integer | O | 0..1 | Maximum number of NFProfiles to be returned in the response. | Query-Params-Ext1 |
| | | | | Minimum: 1 | |
| max-payload-size | integer | O | 0..1 | Maximum payload size (before compression, if any) of the response, expressed in kilo octets. | Query-Params-Ext1 |
| | | | | When present, the NRF shall limit the number of NF profiles returned in the response such as to not exceed the maximum payload size indicated in the request. | |
| | | | | Default: 124. Maximum: 2000 (i.e. 2 Mo). | |
| max-payload-size-ext | integer | O | 0..1 | Maximum payload size (before compression, if any) of the response, expressed in kilo octets. | Query-Params-Ext2 |
| | | | | When present, the NRF shall limit the number of NF profiles returned in the response such as to not exceed the maximum payload size indicated in the request. | |
| | | | | This query parameter is used when the consumer supports payload size bigger than 2 million octets. | |
| | | | | Default: 124 | |
| pdu-session-types | array(PduSessionType) | O | 1..N | List of the PDU session type (s) requested to be supported by the target Network Function (i.e UPF). | Query-Params-Ext1 |
| event-id-list | array(Eventld) | O | 1..N | If present, this attribute shall contain the list of events requested to be supported by the Nnwdaf Analyticslnfo Service, the NRF shall return NF which support all the requested events. | Query-Param-Analytics |
| nwdaf-event-list | array(NwdafEvent) | O | 1..N | If present, this attribute shall contain the list of events requested to be supported by the Nnwdaf_EventsSubscription service, the NRF shall return NF which support all the requested events. | Query-Param-Analytics |
| atsss-capability | AtsssCapability | O | 0..1 | When present, this IE indicates the ATSSS capability of the target UPF needs to be supported. | MAPDU |
| upf-ue-ip-addr-ind | boolean | O | 0..1 | When present, this IE indicates whether a UPF supporting allocating UE IP addresses/prefixes needs to be discovered. | Query-Params-Ext2 |
| | | | | true: a UPF supporting UE IP addresses/prefixes allocation is requested to be discovered; false: a UPF not supporting UE IP addresses/prefixes allocation is requested to be discovered. | |
| client-type | ExternalClientType | O | 0..1 | When present, this IE indicates that NF(s) dedicatedly serving the specified Client Type needs to be discovered. This IE may be included when target NF Type is "LMF" and "GMLC". | Query-Params-Ext2 |
| | | | | If no NF profile is found dedicately serving the requested client type, the NRF may return NF(s) not dedicatedly serving the request client type in the response. | |
| Imf-id | LMFldentification | O | 0..1 | When present, this IE shall contain LMF identification to be discovered. This may be included if the target NF type is "LMF". | Query-Params-Ext2 |
| an-node-type | AnNodeType | O | 0..1 | If included, this IE shall contain the AN Node type which is required to be supported by the target Network Function (i.e. LMF). | Query-Params-Ext2 |
| rat-type | RatType | O | 0..1 | If included, this IE shall contain the RAT type which is required to be supported by the target Network Function (i.e. LMF). | Query-Params-Ext2 |
| target-snpn | PlmnIdNid | C | 0..1 | This IE shall be included when NF services of a specific SNPN need to be discovered. When included, this IE shall contain the PLMN ID and NID of the target NF. | Query-Params-Ext2 |
| | | | | This IE shall also be included in SNPN scenarios, when the entity owning the subscription, the Credentials Holder (see clause 5.30.2.9 in 3GPP TS 23.501 [2]) is an SNPN. | |
| | | | | | |
| af-ee-data | AfEventExposureData | O | 0..1 | When present, this shall contain the application events, and optionally application function identifiers, application identifiers of the AF(s). This may be included if the target NF type is "NEF". | Query-Params-Ext2 |
| w-agf-info | WAgflnfo | O | 0..1 | If included, this IE shall contain the W-AGF identifiers of N3 terminations which is received by the SMF to find the combined W-AGF/UPF. | Query-Params-Ext2 |
| tngf-info | Tngflnfo | O | 0..1 | If included, this IE shall contain the TNGF identifiers of N3 terminations which is received by the SMF to find the combined TNGF/UPF. | Query-Params-Ext2 |
| twif-info | Twiflnfo | O | 0..1 | If included, this IE shall contain the TWIF identifiers of N3 terminations which is received by the SMF to find the combined TWIF/UPF. | Query-Params-Ext2 |
| target-nf-set-id | NfSetld | O | 0..1 | When present, this IE shall contain the target NF Set ID (as defined in clause 28.12 of 3GPP TS 23.003 [12]) of the NF instances being discovered. | Query-Params-Ext2 |
| target-nf-service-set-id | NfServiceSetld | O | 0..1 | When present, this IE shall contain the target NF Service Set ID (as defined in clause 28.13 of 3GPP TS 23.003 [12]) of the NF service instances being discovered. | Query-Params-Ext2 |
| | | | | If this IE is provided together with the target-nf-set-id IE, the NRF shall return service instances of the NF Service Set indicated in the request and should additionally return equivalent ones, if any. | |
| preferred-tai | Tai | O | 0..1 | When present, the NRF shall prefer NF profiles that can serve the TAI, or the NRF shall return NF profiles not matching the TAI if no NF profile is found matching the TAI. | Query-Params-Ext2 |
| | | | | (NOTE 5) | |
| nef-id | Nefld | O | 0..1 | When present, this IE shall contain the NEF ID of the NEF to be discovered. This may be included if the target NF type is "NEF". (NOTE 7) | Query-Params-Ext2 |
| preferred-nf-instances | array(Nflnstanceld) | O | 1..N | When present, this IE shall contain a list of preferred candidate NF instance IDs. (NOTE 8) | Query-Params-Ext2 |
| notification-type | NotificationType | O | 0..1 | If included, this IE shall contain the notification type of default notification subscriptions that shall be registered in the NFProfile or NFService of the NF Instances being discovered. The NF profiles returned by the NRF shall contain all the registered default notification subscriptions, including the one corresponding to the notification-type parameter. | Query-Params-Ext2 |
| | | | | (NOTE 9) | |
| n1-msg-class | N1MessageClass | O | 0..1 | This IE may be included when "notification-type" IE is present with value "N1_MESSAGES". | Query-Params-Ext3 |
| | | | | When included, this IE shall contain the N1 message class of default notification subscriptions that shall be registered in the NFProfile or NFService of the NF Instances being discovered. The NF profiles returned by the NRF shall contain all the registered default notification subscriptions, including the one corresponding to the n1-msg-class parameter. | |
| | | | | (NOTE 9) | |
| n2-info-class | N2InformationClass | O | 0..1 | This IE may be included when "notification-type" IE is present with value "N2_INFORMATION". | Query-Params-Ext3 |
| | | | | If included, this IE shall contain the notification type of default notification subscriptions that shall be registered in the NFProfile or NFService of the NF Instances being discovered. The NF profiles returned by the NRF shall contain all the registered default notification subscriptions, including the one corresponding to the n2-info-class parameter. | |
| | | | | (NOTE 9) | |
| serving-scope | array(string) | O | 1..N | If present, this attribute shall contain the list of areas that can be served by the NF instances to be discovered. The NRF shall return NF profiles of NFs which can serve all the areas requested in this query parameter. | Query-Params-Ext2 |
| | | | | (NOTE 18) | |
| imsi | string | O | 0..1 | If included, this IE shall contain the IMSI of the requester UE to search for an appropriate NF. IMSI may be included if the target NF type is "HSS". | Query-Params-Ext2 |
| | | | | pattern: "^[0-91{5,15}$" | |
| ims-private-identity | string | O | 0..1 | If included, this IE shall contain the IMS Private Identity of the requester UE to search for an appropriate NF. IMS Private Identity may be included if the target NF type is "HSS". | Query-Params-Ext3 |
| ims-public-identity | string | O | 0..1 | If included, this IE shall contain the IMS Public Identity of the requester UE to search for an appropriate NF. IMS Public Identity may be included if the target NF type is "HSS". | Query-Params-Ext3 |
| msisdn | string | O | 0..1 | If included, this IE shall contain the MSISDN of the requester UE to search for an appropriate NF. IMS Public Identity may be included if the target NF type is "HSS". | Query-Params-Ext3 |
| internal-group-identity | Groupld | O | 0..1 | If included, this IE shall contain the internal group identifier of the UE to search for an appropriate NF. This may be included if the target NF type is "UDM" | Query-Params-Ext2 |
| preferred-api-versions | map(string) | O | 1..N | When present, this IE indicates the preferred API version of the services that are supported by the target NF instances. The key of the map is the ServiceName (see clause 6.1.6.3.11)for which the preferred API version is indicated. Each element carries the API Version Indication for the service indicated by the key. The NRF may return additional NFs in the response not matching the preferred API versions, e.g. if no NF profile is found matching the preferred-api-versions. | Query-Params-Ext2 |
| | | | | An API Version Indication is a string formatted as {operator}+{API Version}. | |
| | | | | The following operators shall be supported: | |
| | | | | "=" match a version equals to the version value indicated. | |
| | | | | ">" match any version greater than the version value indicated | |
| | | | | ">=" match any version greater than or equal to the version value indicated | |
| | | | | "<" match any version less than the version value indicated | |
| | | | | "<=" match any version less than or equal to the version value indicated | |
| | | | | "^" match any version compatible with the version indicated, i.e. any version with the same major version as the version indicated. | |
| | | | | Precedence between versions is identified by comparing the Major, Minor, and Patch version fields numerically, from left to right. | |
| | | | | If no operator or an unknown operator is provided in API Version Indication, "=" operator is applied. | |
| | | | | Example of API Version Indication: | |
| | | | | Case1: "=1.2.4.operator-ext" or "1.2.4.operator-ext" means matching the service with API version "1.2.4.operator-ext" | |
| | | | | Case2: ">1.2.4" means matching the service with API versions greater than "1.2.4" | |
| | | | | Case3: "^2.3.0" or "^2" means matching the service with all API versions with major version "2". | |
| v2x-support-ind | boolean | O | 0..1 | When present, this IE indicates whether a PCF supporting V2X Policy/Parameter provisioning needs to be discovered. | Query-Params-Ext2 |
| | | | | true: a PCF supporting V2X Policy/Parameter provisioning is requested to be discovered; false: a PCF not supporting V2X Policy/Parameter provisioning is requested to be discovered. | |
| redundant-gtpu | boolean | O | 0..1 | When present, this IE indicates whether a UPF supporting redundant GTP-U path needs to be discovered. true: a UPF supporting redundant GTP-U path is requested to be discovered; false: a UPF not supporting redundant GTP-U path is requested to be discovered. | Query-Params-Ext2 |
| redundant-transport | boolean | O | 0..1 | When present, this IE indicates whether a UPF supporting redundant transport path on the transport layer in the corresponding network slice needs to be discovered. | Query-Params-Ext2 |
| | | | | true: a UPF supporting redundant transport path on the transport layer is requested to be discovered; false: a UPF not supporting redundant transport path on the transport layer is requested to be discovered. | |
| | | | | If the Snssai(s) are also included, the UPF supporting redundant transport path on the transport layer shall be available in the network slice(s) identified by the Snssai(s). | |
| ipups | boolean | O | 0..1 | When present, this IE indicates whether a UPF which is configured for IPUPS is requested to be discovered. | Query-Params-Ext2 |
| | | | | true: a UPF which is configured for IPUPS is requested to be discovered; | |
| | | | | false: a UPF which is not configured for IPUPS is requested to be discovered. | |
| scp-domain-list | array(string) | O | 1..N | When present, this IE shall contain the SCP domain(s) the target NF, SCP or SEPP belongs to. The NRF shall return NF, SCP or SEPP profiles that belong to all the SCP domains provided in this list. | Query-Params-Ext2 |
| address-domain | Fqdn | O | 0..1 | If included, this IE shall contain the address domain that shall be reachable through the SCP. This IE may be included when the target NF type is "SCP". | Query-Params-Ext2 |
| ipv4-addr | Ipv4Addr | O | 0..1 | If included, this IE shall contain the IPv4 address that shall be reachable through the SCP. This IE may be included when the target NF type is "SCP". | Query-Params-Ext2 |
| ipv6-prefix | Ipv6Prefix | O | 0..1 | If included, this IE shall contain the IPv6 prefix that shall be reachable through the SCP. This IE may be included when the target NF type is "SCP". | Query-Params-Ext2 |
| served-nf-set-id | NfSetld | O | 0..1 | When present, this IE shall contain the NF Set ID that shall be reachable through the SCP. This IE may be included when the target NF type is "SCP". | Query-Params-Ext2 |
| remote-plmn-id | PlmnId | O | 0..1 | If included, this IE shall contain the remote PLMN ID that shall be reachable through the SCP or SEPP. This IE may be included when the target NF type is "SCP" or "SEPP". | Query-Params-Ext2 |
| data-forwarding | boolean | O | 0..1 | This may be included if the target NF type is "UPF". (NOTE 13) | Query-Params-Ext2 |
| | | | | When present, the IE indicates whether UPF(s) configured for data forwarding needs to be discovered. true: UPF(s) configured for data forwarding is requested to be discovered; false: UPF(s) not configured for data forwarding is requested to be discovered. | |
| preferred-full-plmn | boolean | O | 0..1 | When present, the NRF shall prefer NF profile(s) that can serve the full PLMN (i.e. can serve any TAI in the PLMN), or the NRF shall return other NF profiles if no NF profile serving the full PLMN is found: | Query-Params-Ext2 |
| | | | | - true: NF instance(s) serving the full PLMN is preferred; | |
| | | | | - false: NF instance(s) serving the full PLMN is not preferred. | |
| | | | | (NOTE 14) | |
| requester-features | Supported Features | C | 0..1 | Nnrf_NFDiscovery features supported by the Requester NF that is invoking the Nnrf_NFDiscovery service. | |
| | | | | This IE shall be included if at least one feature is supported by the Requester NF. | |
| realm-id | string | O | 0..1 | May be included if the target NF type is "UDSF". If included, this IE shall contain the realm-id for which a UDSF shall be discovered. | Query-Params-Ext4 |
| storage-id | string | O | 0..1 | May be included if the target NF type is "UDSF" and realm-id is included. If included, this IE shall contain the storage-id for the realm-id indicated in the realm-id IE for which a UDSF shall be discovered. | Query-Params-Ext4 |
| vsmf-support-ind | boolean | O | 0..1 | If included, this IE shall indicate that target SMF(s) that support V-SMF Capability are preferred. | Query-Param-vSmf-Capability |
| | | | | This IE may be included when the target NF type is "SMF". | |
| | | | | (NOTE 15) | |
| nrf-disc-uri | Uri | C | 0..1 | If included, this IE shall contain the API URI of the NFDiscovery Service (see clause 6.2.1) of the NRF holding the NF Profile. | Enh-NF-Discovery |
| | | | | It shall be included if: | |
| | | | | - the target-nf-instance-id is present; | |
| | | | | - the NF Service Consumer has previously received such API URI in an earlier NF service discovery, i.e. if the target NF instance was provided in the nfInstanceList attribute in SearchResult (see clause 6.2.6.2.2) and the nrfDiscApiUri attribute was present in the Nflnstancelnfo (see clause 6.2.6.2.x); and | |
| | | | | - the service discovery request is addressed to a different NRF than the NRF holding the NF profile. | |
| preferred-vendor-specific-features | map(map(array( VendorSpecificFeature))) | O | 1..N( 1..M(1..L)) | When present, this IE indicates the list of preferred vendor-specific features supported by the target Network Function, as defined by the supportedVendorSpecificFeatur es attribute in NFService (see clauses 6.1.6.2.3 and 6.2.6.2.4). NF profiles that support all the preferred features, or by default, NF profiles that contain at least one service supporting the preferred features, should be preferentially returned in the response; NF profiles in the response may not support the preferred features. | Query-SBIProtoc17 |
| | | | | The key of the external map is the ServiceName (see clause 6.1.6.3.11) for which the preferred vendor-specific features is indicated. Each element carries the preferred vendor-specific features for the service indicated by the key. | |
| | | | | The key of the internal map is the IANA-assigned "SMI Network Management Private Enterprise Codes" [38]. The string used as key of the internal map shall contain 6 decimal digits; if the SMI code has less than 6 digits, it shall be padded with leading digits "0" to complete a 6-digit string value. | |
| | | | | The value of each entry of the map shall be a list (array) of VendorSpecificFeature objects. | |
| | | | | The NF profiles returned by the NRF shall include the full list of vendor-specific-features and not just the interclause of supported and preferred vendor-specific features. | |
| preferred-vendor-specific-nf-features | map(array( VendorSpecificFeature)) | O | 1..N(1..M) | When present, this IE indicates the list of preferred vendor-specific features supported by the target Network Function, as defined by the supportedVendorSpecificFeatur es attribute in NF profile (see clause 6.1.6.2.2 and 6.2.6.2.3). NF profiles that support all the preferred features should be preferentially returned in the response. NF profiles in the response may not support the preferred features. | Query-SBIProtoc17 |
| | | | | The key of the map is the IANA-assigned "SMI Network Management Private Enterprise Codes" [38]. The value of each entry of the map shall be a list (array) of VendorSpecificFeature objects. | |
| | | | | The NF profiles returned by the NRF shall include the full list of vendor-specific features and not just the interclause of supported and preferred vendor-specific features. | |
| required-pfcp-features | string | O | 0..1 | List of features required to be supported by the target UPF or MB-UPF (when selecting a UPF or a MB-UPF), encoded as defined for the supportedPfcpFeatures attribute in UpfInfo (see clause 6.1.6.2.13). | Query-Upf-Pfcp |
| | | | | (NOTE 16) | |
| home-pub-key-id | integer | O | 0..1 | When present, this IE shall indicate the Home Network Public Key ID which shall be able to be served by the NF instance. | Query-SBIProtoc17 |
| | | | | May be included if the target NF type is "AUSF" or "UDM". (NOTE 17) | |
| prose-support-ind | boolean | O | 0..1 | When present, this IE indicates whether supporting ProSe capability by PCF needs to be discovered. | Query-5G-ProSe |
| | | | | true: a PCF supporting ProSe capability is requested to be discovered; false: a PCF not ProSe capability is requested to be discovered. | |
| analytics-aggregation-ind | boolean | O | 0..1 | If included, this IE shall contain the analytics aggregation capability indication of the NF being discovered. This IE may be included when the target NF type is "NWDAF". | Query-eNA-PH2 |
| analytics-metadata-prov-ind | boolean | O | 0..1 | If included, this IE shall contain the analytics metadata provisioning capability indication of the NF being discovered. This IE may be included when the target NF type is "NWDAF". | Query-eNA-PH2 |
| serving-nf-set-id | NfSetld | O | 0..1 | When present, this IE shall contain the NF Set ID that is served by the DCCF, NWDAF or MFAF. This IE may be included when the target NF type is "DCCF" or "NWDAF" or "MFAF". | Query-eNA-PH2 |
| serving-nf-type | NFType | O | 0..1 | When present, this IE shall contain the NF type that is served by the DCCF, NWDAF or MFAF. This IE may be included when the target NF type is "DCCF" or "NWDAF" or "MFAF". | Query-eNA-PH2 |
| ml-analytics-id-list | array(NwdafEvent) | O | 1..N | If present, this attribute shall contain the list of analytics Id(s) requested to be supported by the Nnwdaf_MLModelProvision Service, the NRF shall return NF which support all the requested analytics Id(s). | Query-eNA-PH2 |
| nsacf-capability | NsacfCapability | O | 0..1 | When present, this IE indicates the service capability that the target NSACF needs to support. | NSAC |
| mbs-session-id-list | array(MbsSessionld) | O | 0..1 | This IE may be present if the target NF type is "MB-SMF". | Query-MBS |
| | | | | When present, it shall contain the list of MBS Session ID(s) for which MB-SMF(s) are to be discovered. | |
| | | | | When present, for each mbs-session-id in the list, the NRF shall determine whether an MB-SMF supporting the mbs-session-id and complying with the other query parameters (if any) exists. An MB-SMF shall be considered to support the mbs-session-id if: | |
| | | | | - the mbs-session-id contains a | |
| | | | | TMGI that is part of a TMGI range (see tmgiRangeList attribute in clause 6.1.6.2.85) registered by the MB-SMF and, if the tai query parameter is present: | |
| | | | | - if the TAI indicated in the tai query parameter can be served by the MB-SMF (see taiList and taiRangeList attributes in clause 6.1.6.2.85); | |
| | | | | or | |
| | | | | - the mbs-session-id contains a TMGI or an SSM address, that is part of the list of MBS sessions currently served by the MB-SMF (see mbsSessionList attribute in clause 6.1.6.2.85) and, if the tai query parameter is present and the MBS session is registered with an MBS Service Area (see mbsServiceArea in clause 6.1.6.2.90): | |
| | | | | - if the TAI indicated in the tai query parameter is supported by the MBS Service Area of the MBS session. | |
| | | | | If so, the NRF shall return the profile of this MB-SMF. If no MB-SMF supporting the mbs-session-id and complying with the other query parameters exists, the NRF shall return MB-SMF profiles based on the other query parameters, e.g. profiles of MB-SMF(s) that can serve the TAI indicated in the tai query parameters. | |
| | | | | See clause 7.1.2 of 3GPP TS 23.247 [43]. | |
| gmlc-number | string | O | 0..1 | If included, this IE shall contain the GMLC Number of which should supported by the target GMLC. It may be included if the target NF type is "GMLC". | Query-eLCS |
| | | | | Pattern: "^[0-9]{5,15}$" | |
| upf-n6-ip | IpAddr | O | 0..1 | If included, this IE shall contain the N6 IP address of PSA UPF. | Query-eEDGE-5GC |
| | | | | It may be included if the target NF type is "EASDF". | |
| tai-list | array(Tai) | O | 1..N | If included, this IE shall contain the Tracking Area Identities requested to be supported by the NFs being discovered. The NRF shall return NFs which support all the TAls in the list. It may be included if the target NF type is "NEF". | Query-eEDGE-5GC |
| preferences-precedence | array(string) | O | 2..N | This IE may be present when multiple query parameters expressing a preference are included in the discovery request. | Query-SBIProtoc17 |
| | | | | When present, this IE shall indicate the relative precedence of these query parameters (from higher precedence to lower precedence). The NRF shall use the indicated precedence to prioritize the candidate NFs in the search result, among the candidate NFs partially matching the different preference query parameters, candidate matching the higher precedence preference query parameter should have higher priority. | |
| | | | | This IE may include any query parameter named "preferred-xxx" (e.g. preferred-locality, preferred-tai). | |
| | | | | Example: | |
| | | | | preferences-precedence=[preferred-tai, preferred-vendor-specific-featur es] | |
| | | | | The above value indicates that the "preferred-tai" parameter has higher precedence than the "preferred-vendor-specific-featur es" parameter. | |
| NOTE 1: If this parameter is present and no AMF supporting the requested GUAMI is available due to AMF Failure or planned AMF removal, the NRF shall return in the response AMF instances acting as a backup for AMF failure or planned AMF removal respectively for this GUAMI (see clause 6.1.6.2.11). The NRF can detect if an AMF has failed, using the Heartbeat procedure. The NRF will receive a de-registration request from an AMF performing a planned removal. | | | | | |
| NOTE 2: If the combined SMF/PGW-C is requested to be discovered, the NRF shall return in the response the SMF instances registered with the Smfinfo containing pgwFqdn. | | | | | |
| NOTE 3: If a UPF supporting interworking with EPS is requested to be discovered, the NRF shall return in the response the UPF instances registered with the upflnfo containing iwkEpsInd set to true. | | | | | |
| NOTE 4: This attribute has a different semantic than what is defined in clause 6.6.2 of 3GPP TS 29.500 [4], i.e. it is not used to signal optional features of the Nnrf_NFDiscovery Service API supported by the requester NF. | | | | | |
| NOTE 5: The AMF may perform the SMF discovery based on the dnn, snssais and preferred-tai during a PDU session establishment procedure, and the NRF shall return the SMF profiles matching all if possible, or the SMF profiles only matching dnn and snssais. If the SMF profiles only matching dnn and snssais are returned, the AMF shall insert an I-SMF. An SMF may also perform a UPF discovery using this parameter. | | | | | |
| NOTE 6: The SMF may select the P-CSCF close to the UPF by setting the preferred-locality to the value of the locality of the UPF. | | | | | |
| NOTE 7: During EPS to 5GS idle mobility procedure, the Requester NF (i.e. SMF) discovers the anchor NEF for NIDD using the SCEF ID received from EPS as the value of the NEF ID, as specified in clause 4.11.1.3.3 of 3GPP TS 23.502 [3]. | | | | | |
| NOTE 8: The service consumer may include a list of preferred-nf-instance-ids in the query. If so, the NRF shall first check if the | | | | | |
| NF profiles of the preferred NF instances match the other query parameters, and if so, then the NRF shall return the corresponding NF profiles; otherwise, the NRF shall return a list of candidate NF profiles matching the query parameters other than the preferred-nf-instance-ids. For example, the target AMF may set this query parameter to the SMF Instance ID and I-SMF Instance ID during an inter AMF mobility procedure to select an I-SMF. | | | | | |
| NOTE 9: This parameter may be used by the SCP (with other query parameters) to discover and select a NF service consumer with a default notification subscription supporting the notification type of a notification request (see clause 6.10.3.3 of 3GPP TS 29.500 [4]). | | | | | |
| NOTE 10: An S-NSSAI value used in discovery request query parameters shall be considered as matching the S-NSSAI value in the NF Profile or NF Service of a given NF Instance if both the SST and SD components are identical (i.e. an S-NSSAI value where SD is absent, shall not be considered as matching an S-NSSAI where SD is present, regardless if SST is equal in both). | | | | | |
| NOTE 11: The dnn query parameter shall be considered as matching a DNN attribute in the NF Profile of a given NF Instance if: | | | | | |
| - both contain the same Network Identifier and Operator Identifier; | | | | | |
| - both contain the same Network Identifier and none contains an Operator Identifier; | | | | | |
| - the dnn query parameter contains the Network Identifier only, the DNN value in the NF Profile contains both the Network Identifier and Operator Identifier, and both contain the same Network Identifier; or | | | | | |
| - the dnn query parameter contains both the Network Identifier and Operator Identifier, the DNN value in the NF Profile contains the Network Identifier only, both contain the same Network Identifier and the Operator Identifier matches one PLMN of the NF (i.e. plmnList of the NF Profile). | | | | | |
| NOTE 12: Based on operator's policies, a discovery request not including the requester's information necessary to validate the authorization parameters in NF Profiles may be rejected or accepted but with only returning in the discovery response NF Instances whose authorization parameters allow any NF Service Consumer to access their services. The authorization parameters in NF Profile are those used by NRF to determine whether a given NF Instance / NF Service Instance can be discovered by an NF Service Consumer in order to consume its offered services (e.g. "allowedNfTypes", "allowedNfDomains", etc.). | | | | | |
| NOTE 13: Different UPF instances for data forwarding may be configured in the network e.g. for different serving areas. The SMF may use this query parameter together with others (like SMF Serving Area or TAI) in discovery to select the UPF candidate for data forwarding. | | | | | |
| NOTE 14: For HR roaming, if the V-PLMN requires Deployments Topologies with specific SMF Service Areas (DTSSA) but no H-SMF can be selected supporting V-SMF change, AMF may use this query parameter to select a V-SMF serving the full VPLMN if available. | | | | | |
| NOTE 15: The AMF may perform discovery with this parameter to find V-SMF(s), and the NRF shall return the SMF profiles that explicitly indicated support of V-SMF capability. When performing discovery, the AMF shall use other query parameters together with this IE to ensure the required configurations and/or features are supported by the V-SMF, e.g. required Slice for the PDU session, support of DTSSA feature if V-SMF change is required for PDU Session, etc. If no SMF instances that explicitly indicated support of V-SMF capability can be matched for the discovery, the NRF shall return matched SMF instances not indicating support of V-SMF capability explicitly, i.e. the SMF instances not registered vsmfSupportInd IE in the NF profile but matched to the rest query parameters, if available. | | | | | |
| NOTE 16: When required-pfcp-features is used as query parameter, the NRF shall return a list of candidate UPFs supporting all the required PFCP features. The NRF may also return UPF profiles not including the "SupportedPfcpFeatures" attribute (e.g. pre-Rel-17 UPFs) but matching the other query parameters. The NF Service Consumer, e.g. a SMF, when using required-pfcp-features as query parameter, shall also include the query parameter corresponding to the UPF features (atsss-capability, upf-ue-ip-addr-ind, redundant-gtpu) which correspond to the PFCP feature flags MPTCP and ATSSS_LL, UEIP, and RTTL respectively, if the corresponding PFCP feature is required. For example an SMF, that wishes to select a UPF supporting UE IP Address Allocation by the UP function, shall set the UEIP flag to "1" in the required-pfcp-features and also include the upf-ue-ip-addr-ind parameter set to "true". | | | | | |
| NOTE 17: This may only be used by the HPLMN in roaming scenarios in this release of the specification, i.e. an AMF in a visited network does not use the Home Network Public Key ID for AUSF/UDM selection. | | | | | |
| NOTE 18: The NF service consumer may derive the serving scope from e.g. the TAI of the UE, using local configuration. This parameter may be used to discover any NF that registers to the NRF, e.g. a 5GC NF or a P-CSCF. | | | | | |
| NOTE 19: If the NRF supports the "Collocated-NF-Selection" feature and the NF service consumer has included the "preferred-collocated-nf-types" attribute, the NRF shall return a list of candidates NFs (for the target-nf-type) matching the discovery query parameters and preferentially supporting CollocatedNfType(s) as indicated in the preferred-collocated-nf-types. | | | | | |
| NOTE x: If the NRF supports this IE and the NF service consumer has included this IE with the value "true" in discovery request. the NRF shall check whether any PGW-C+SMF instances matching the other query parameters and return the matched PGW-C+SMF instances. If no matching is found. the NRF shall return a list of standalone SMF instances matching the other query parameters. If the NRF supports this IE and the NF service consumer has included this IE with the value "false" in discoverv request. the NRF shall check whether any standalone SMF instances matching the other querv oarameters and return the matched standalone SMF instances. If no matching is found. the NRF shall return a list of PGW-C+SMF instances matching the other query parameters. | | | | | |

The default logical relationship among the query parameters is logical "AND", i.e. all the provided query parameters shall be matched, with the exception of the "preferred-locality", "preferred-nf-instances", "preferred-tai", "preferred-api-versions", "preferred-full-plmn", "preferred-collocated-nf-types", "preferred-pgw-ind" and "mbs-session-id" query parameters (see Table 6.2.3.2.3.1-1).

The NRF may support the Complex query expression as defined in 3GPP TS 29.501 [5] for the NF Discovery service. If the "complexQuery" query parameter is included, then the logical relationship among the query parameters contained in "complexQuery" query parameter is as defined in 3GPP TS 29.571 [7].

A NRF not supporting Complex query expression shall reject a NF service discovery request including a complexQuery parameter, with a ProblemDetails IE including the cause attribute set to INVALID_QUERY_PARAM and the invalidParams attribute indicating the complexQuery parameter.

This method shall support the request data structures specified in table 6.1.3.2.3.1-2 and the response data structures and response codes specified in table 6.1.3.2.3.1-3.

**Table 6.2.3.2.3.1-3: Data structures supported by the GET Response Body on this resource**

| **Data type** | **P** | **Cardinality** | **Description** | **Description** |
|---|---|---|---|---|
| n/a | | | | The response body contains the result of the search over the list of registered NF Instances. |
| RedirectResponse | O | 0..1 | 307 Temporary Redirect | The response shall be used when the intermediate NRF redirects the service discovery request. |
| | | | | The NRF shall include in this response a Location header field containing a URI pointing to the resource located on the redirect target NRF. |
| | | | | If an SCP redirects the message to another SCP then the location header field shall contain the same URI or a different URI pointing to the endpoint of the NF service producer to which the request should be sent. |
| ProblemDetails | O | 0..1 | 400 Bad Request | The response body contains the error reason of the request message. |
| | | | | If the query parameter used to match the authorization parameter is required but not provided in the NF discovery request, the "cause" attribute shall be set to "MANDATORY_QUERY_PARAM_MISSI NG", and the missing query parameter shall be indicated. |
| ProblemDetails | O | 0..1 | 403 Forbidden | This response shall be returned if the Requester NF is not allowed to discover the NF Service(s) being queried. |
| ProblemDetails | O | 0..1 | 404 Not Found | This response shall be returned if the requested resource URI as defined in clause 6.2.3.2.2 (query parameter not considered) is not found in the server. |
| | | | | It may also be sent in hierarchical NRF deployments when the NRF needs to forward/redirect the request to another NRF but lacks information in the request to do so; similarly, the NRF shall return this response code when it is received from the upstream NRF. |
| ProblemDetails | O | 0..1 | 500 Internal Server Error | The response body contains the error reason of the request message. |

**Table 6.2.3.2.3.1-4: Headers supported by the GET method on this endpoint**

| **Name** | **Data type** | **P** | **Cardinality** | **Description** |
|---|---|---|---|---|
| If-None-Match | string | C | 0..1 | Validator for conditional requests, as described in IETF RFC 7232 [19], clause 3.2 |

**Table 6.2.3.2.3.1-5: Headers supported by the 200 Response Code on this endpoint**

| **Name** | **Data type** | **P** | **Cardinality** | **Description** |
|---|---|---|---|---|
| Cache-Control | string | C | 0..1 | Cache-Control containing max-age, described in IETF RFC 7234 [20], clause 5.2 |
| ETag | string | C | 0..1 | Entity Tag containing a strong validator, described in IETF RFC 7232 [19], clause 2.3 |

**Table 6.2.3.2.3.1-6: Headers supported by the 307 Response Code on this endpoint**

| **Name** | **Data type** | **P** | **Cardinality** | **Description** |
|---|---|---|---|---|
| Location | string | M | 1 | The URI pointing to the resource located on the redirect target NRF |

**Table 6.2.3.2.3.1-7: Links supported by the 200 Response Code on this endpoint**

| **Name** | **Resource name** | **HTTP method or custom operation** | **Parameters table** | **Description** |
|---|---|---|---|---|
| search | Stored Search (Docum ent) | GET | 6.2.3.2.3.1-8 | The 'searchld' parameter returned in the response can be used as the 'searchld' parameter in the GET request to '/searches/{searchId}' |
| completeSearch | Complete Stored Search (Docum ent) | GET | 6.2.3.2.3.1-9 | The 'searchld' parameter returned in the response can be used as the 'searchld' parameter in the GET request to '/searches/{searchld}/complete' |

*** 2nd Change *** (the underline indicates the content to be added to the 3GPP Technical Specification)

### 6.2.6.2.6 Type: PreferredSearch

**Table 6.2.6.2.6-1: Definition of type PreferredSearch**

| **Attribute name** | **Data type** | **P** | **Cardinality** | **Description** |
|---|---|---|---|---|
| preferredTaiMatchInd | boolean | C | 0..1 | Indicates whether all the returned NFProfiles match or do not match the query parameter preferred-tai. |
| | | | | true: Match |
| | | | | false (default): Not Match |
| preferredFullPlmnMatch Ind | boolean | O | 0..1 | Indicates whether all the returned NFProfiles match or do not match the query parameter preferred-full-plmn. |
| | | | | true: Match |
| | | | | false (default): Not Match |
| preferredApiVersionsMa tchInd | boolean | O | 0..1 | Indicates whether the search result includes at least one NF Profile that matches all the preferred API versions indicated in the query parameter preferred-api-versions. |
| | | | | true: Match |
| | | | | false: Not Match |
| otherApiVersionslnd | boolean | O | 0..1 | This IE may be present if the preferred-api-versions query parameter is provided in the discovery request. |
| | | | | When present, this IE indicates whether there is at least one NF Profile with other API versions, i.e. that does not match all the preferred API versions indicated in the preferred-api-versions, returned in the response or not. |
| | | | | true: Returned |
| | | | | false: Not returned |
| preferredLocalityMatchI nd | boolean | O | 0..1 | Indicates whether the search result includes at least one NFProfile that match the query parameter preferred-locality. |
| | | | | true: Match |
| | | | | false (default): Not Match |
| otherLocalitylnd | boolean | O | 0..1 | This IE may be present if preferred-locality query parameter is provided in the discovery request. |
| | | | | When present, this IE indicates whether there is at least one NFProfile with another locality, i.e. not matching the preferred-locality, returned in the response or not. |
| | | | | true: Returned |
| | | | | false (default): Not returned |
| preferredVendorSpecific FeaturesInd | boolean | O | 0..1 | Indicates whether all the returned NFProfiles match (or do not match) the query parameter preferred-vendor-specific-features (i.e. whether they support all the preferred vendor-specific-features). |
| | | | | true: Match |
| | | | | false (default): Not Match |
| preferredCollocatedNfT ypelnd | boolean | O | 0..1 | Indicates whether all the returned NFProfiles match (or do not match) the query parameter preferred-collocated-nf-types. |
| | | | | true: Match |
| | | | | false (default): Not Match |
| preferredPgwMatchInd | boolean | O | 0..1 | Indicates whether all the returned NFProfiles match or do not match the query parameter preferred-pqw-ind |
| | | | | true: Match |
| | | | | false (default): Not Match |

*** 3rd Change *** (the underline indicates the content to be added to the 3GPP Technical Specification)

### 6.2.9 Features supported by the NFDiscovery service

The syntax of the supportedFeatures attribute is defined in clause 5.2.2 of 3GPP TS 29.571 [7].

The following features are defined for the Nnrf_NFDiscovery service.

**Table 6.2.9-1: Features of supportedFeatures attribute used by Nnrf_NFDiscovery service**

| **Feature Number** | | **Feature** | **M/O** | **Description** |
|---|---|---|---|---|
| 1 | | Complex-Query | O | Support of Complex Query expression (see clause 6.2.3.2.3.1) |
| 2 | | Query-Params-Ex t1 | O | Support of the following query parameters: |
| | | | | - limit |
| | | | | - max-payload-size |
| | | | | - required-features |
| | | | | - pdu-session-types |
| 3 | | Query-Param-Ana | O | Support of the query parameters for Analytics identifier: |
| | | lytics | | - event-id-list |
| | | | | - nwdaf-event-list |
| 4 | | MAPDU | O | This feature indicates whether the NRF supports selection of UPF with ATSSS capability. |
| 5 | | Query-Params-Ex t2 | O | Support of the following query parameters: |
| | | | | - requester-nf-instance-id |
| | | | | - upf-ue-ip-addr-ind |
| | | | | - pfd-data |
| | | | | - target-snpn |
| | | | | - af-ee-data |
| | | | | - w-agf-info |
| | | | | - tngf-info |
| | | | | - twif-info |
| | | | | - target-nf-set-id |
| | | | | - target-nf-service-set-id |
| | | | | - preferred-tai |
| | | | | - nef-id |
| | | | | - preferred-nf-instances |
| | | | | - notification-type |
| | | | | - serving-scope |
| | | | | - internal-group-identity |
| | | | | - preferred-api-versions |
| | | | | - v2x-support-ind |
| | | | | - redundant-gtpu |
| | | | | - redundant-transport |
| | | | | - Imf-id |
| | | | | - an-node-type |
| | | | | - rat-type |
| | | | | - ipups |
| | | | | - scp-domain-list |
| | | | | - address-domain |
| | | | | - ipv4-addr |
| | | | | - ipv6-prefix |
| | | | | - served-nf-set-id |
| | | | | - remote-plmn-id |
| | | | | - data-forwarding |
| | | | | - preferred-full-plmn |
| | | | | - requester-snpn-list |
| | | | | - max-payload-size-ext |
| | | | | - client-type |
| 6 | | Service-Map | M | This feature indicates whether it is supported to identify the list of NF Service Instances as a map (i.e. the "nfServiceList" attribute of NFProfile is supported). |
| 7 | | Query-Params-Ex t3 | O | Support of the following query parameters: |
| | | | | - ims-private-identity |
| | | | | - ims-public-identity |
| | | | | - msisdn |
| | | | | - requester-plmn-specific-snssai-list |
| | | | | - n1-msg-class |
| | | | | - n2-info-class |
| 8 | | Query-Params-Ex t4 | O | Support of the following query parameters: |
| | | | | - realm-id |
| | | | | - storage-id |
| 9 | | Query-Param-vS | O | Support of the query parameters for V-SMF Capability: |
| | | mf-Capability | | - vsmf-support-ind |
| 10 | | Enh-NF-Discovery | O | Enhanced NF Discovery This feature indicates whether it is supported to return the nflnstanceList IE in the NF Discovery response. |
| 11 | | Query-SBIProtoc1 7 | O | Support of the following query parameters, for Service Based Interface Protocol Improvements defined in 3GPP Rel-17:: |
| | | | | - preferred-vendor-specific-features |
| | | | | - preferred-vendor-specific-nf-features |
| | | | | - home-pub-key-id |
| | | | | - pgw-ip |
| | | | | - preferences-precedence |
| | | | | - preferred-pqw-ind |
| 12 | | SCPDRI | O | SCP Domain Routing Information |
| | | | | An NRF supporting this feature shall allow a service consumer (i.e. a SCP) to get the SCP Domain Routing Information and subscribe/unsubscribe to the change of SCP Domain Routing Information with following service operations: |
| | | | | - SCPDomainRoutinglnfoGet (see clause 5.3.2.3) |
| | | | | - SCPDomainRoutingInfosubscribe (see clause 5.3.2.4) |
| | | | | - SCPDomainRoutingInfoUnsubscribe (see clause 5.3.2.6) |
| | | | | A service consumer (i.e. a SCP) supporting this feature shall be able to handle SCPDomainRoutinglnfoNotify as specified in clause 5.3.2.5, if subscribed to the change of SCP Domain Routing Information in the NRF. |
| 13 | | Query-Upf-Pfcp | O | This feature indicates whether the NRF supports selection of UPF with required UP function features as defined in 3GPP TS 29.244 [21]. |
| 14 | | Query-5G-ProSe | O | Support of the following query parameters, for Proximity based Services in 5GS defined in 3GPP Rel-17:: |
| | | | | - prose-support-ind |
| 15 | | NSAC | O | This feature indicates the NSACF service capability. Support of the following query parameters: |
| | | | | - nsacf-capability |
| 16 | | Query-MBS | O | Support of the following query parameters, for Multicast and Broadcast Services defined in 3GPP Rel-17: |
| | | | | - mbs-session-id-list |
| | | | | - mbsmf-serving-area |
| 17 | | Query-eNA-PH2 | O | Support of the following query parameters, for Enhanced Network Automation Phase 2 defined in 3GPP Rel-17: |
| | | | | - analytics-aggregation-ind |
| | | | | - serving-nf-set-id |
| | | | | - serving-nf-type |
| | | | | - ml-analytics-id-list |
| | | | | - analytics-metadata-prov-ind |
| 18 | | Query-eLCS | O | Support of the following query parameters, for 5G LCS service: |
| | | | | - qmlc-number |
| 19 | | Query-eEDGE-5G C | O | Support of the following query parameters, for enhancement of support for Edge Computing in 5GC defined in 3GPP Rel-17: |
| | | | | - upf-n6-ip |
| | | | | - tai-list |
| 20 | | Collocated-NF-Sel ection | O | Support of selecting a collocated NF supporting multiple NF types. |
| Feature number: The order number of the feature within the supportedFeatures attribute (starting with 1). | | | | |
| Feature: A short name that can be used to refer to the bit and to the feature. | | | | |
| M/O: Defines if the implementation of the feature is mandatory ("M") or optional ("O"). | | | | |
| Description: A clear textual description of the feature. | | | | |
| NOTE 1: | An NRF that advertises support of a given feature shall support all the query parameters associated with the feature. An NRF may support none or a subset of the query parameters of features that it does not advertise as supported. | | | |
| NOTE 2: | For a release under development, it is recommended to define new features for new query parameters by grouping them per 3GPP work item. Any definition of new query parameters in a frozen release requires a new feature definition. | | | |

*** 4th Change *** (the underline indicates the content to be added to the 3GPP Technical Specification)

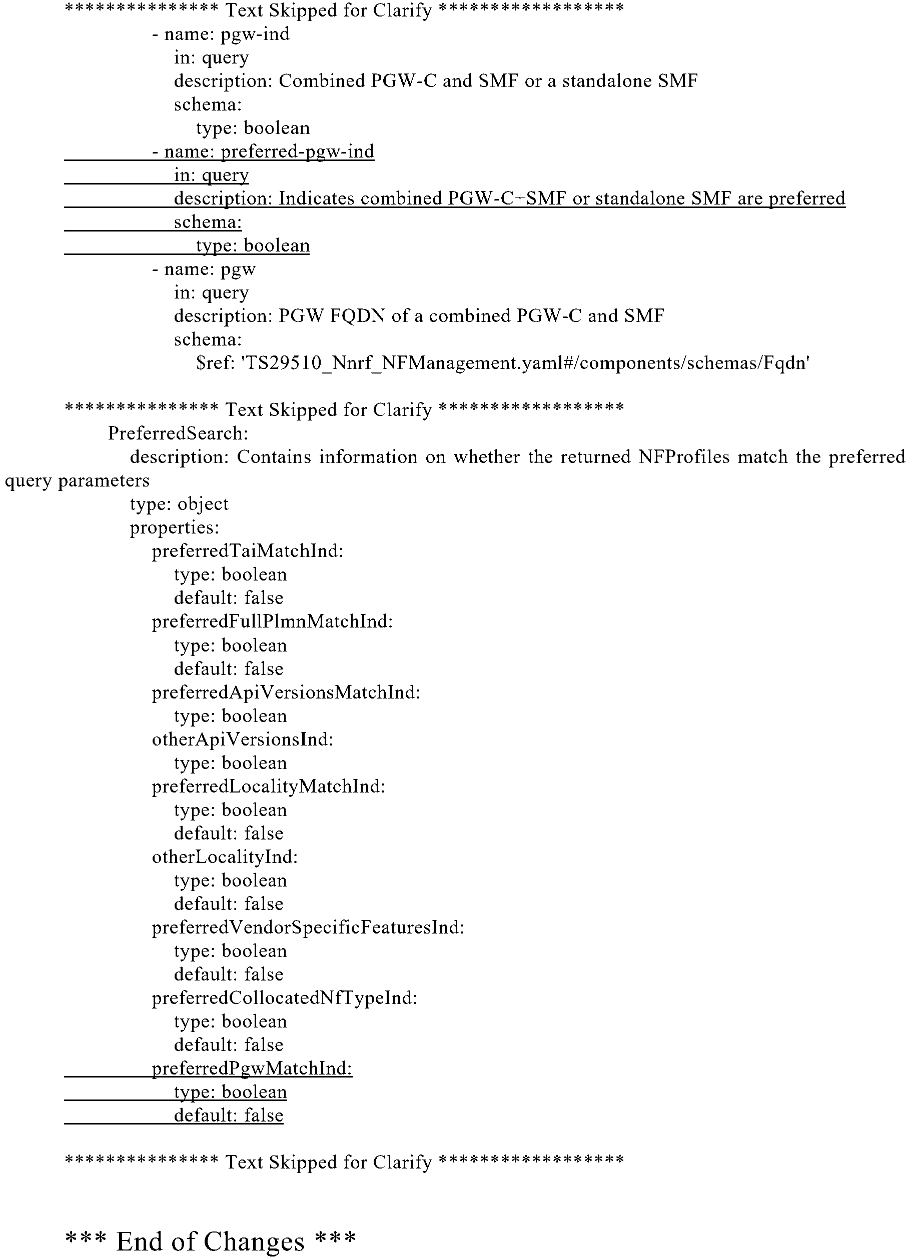

Example embodiments are described herein with reference to block diagrams and/or flowchart illustrations of computer-implemented methods, apparatus (systems and/or devices) and/or non-transitory computer program products. It is understood that a block of the block diagrams and/or flowchart illustrations, and combinations of blocks in the block diagrams and/or flowchart illustrations, may be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that may direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

### Abbreviations

- 4G: fourth generation of mobile communication technology
- 5G: fifth generation of mobile communication technology
- 5GC: 5G Core
- AMF: Access and Mobility Management Function
- DNN: Data Network Name
- NRF: Network Repository Function
- OTT: Over The Top
- PDU: Protocol Data Unit
- PGW: Packet Data Network Gateway
- SMF: Session Management Function
- SNSSAI: Single Network Slice Selection Assistance Information
- TAI: Tracking Area Identity
- UE: User Equipment.

## Claims

1. A method (400) performed by a first network function (101, 201) implementing a service consumer, comprising:
- transmitting (S401), to a second network function (102) implementing a Network Repository Function (NRF), a discovery request for discovering one or more third network functions (103) implementing service producers, wherein the discovery request including one or more query parameters and a preference indication indicating whether one or more combined third network functions (103) or one or more standalone third network functions (103) are preferred; and
- receiving (S402), from the second network function (102), a discovery response including information about the discovered one or more third network functions (103) and a match indication indicating whether the discovered one or more third network functions (103) match the preference indication, wherein when the match indication indicates there is no matching to the preference indication, the discovered one or more third network functions (103) comprise one or more non-preferred third network functions (103) matching the one or more query parameters.

2. The method (400) according to claim 1, wherein the preference indication indicates whether one or more combined third network functions (103) or one or more standalone third network functions (103) are preferred to be discovered.

3. The method (400) according to claim 2, when one or more combined third network functions (103) are preferred to be discovered:
if one or more combined third network functions (103) matching the one or more query parameters are discovered, the discovery response includes information about the discovered one or more combined third network functions (103); or
if no combined third network function (103) is discovered and one or more standalone third network functions (103) matching the one or more query parameters are discovered, the discovery response includes information about the discovered one or more standalone third network functions (103).

4. The method (400) according to claim 2, when one or more standalone third network functions (103) are preferred to be discovered:
if one or more standalone third network functions (103) matching the one or more query parameters are discovered, the discovery response includes information about the discovered one or more standalone third network functions (103); or
if no standalone third network function (103) is discovered and one or more combined third network functions (103) matching the one or more query parameters are discovered, the discovery response includes information about the discovered one or more combined third network functions (103).

5. The method (400) according to any one of claims 1-4, wherein the discovery request further includes information elements of Data Network Name (DNN), Single Network Slice Selection Assistance Information (SNSSAI), and one or more of Tracking Area Identity (TAI), preferred TAI, and preferred locality.

6. The method (400) according to any one of claims 1-5, wherein the preference indication is represented by an information element preferred Packet Data Network Gateway (PGW) indication (preferred-pgw-ind) or an information element PGW indication (pgw-ind), or
wherein the match indication is represented by an information element preferred PGW match indication (preferredPgwMatchInd).

7. The method (400) according to any one of claims 1-6,
wherein the discovery request is a request of Nnrf_NFDiscovery_NFDiscover service operation during a Protocol Data Unit (PDU) session establishment procedure;
wherein the discovery response is a response of Nnrf_NFDiscovery_NFDiscover service operation during a PDU session establishment procedure;
wherein the first network function (101, 201) implementing service consumer is an Access and Mobility Management Function (AMF);
wherein the one or more third network functions (103) implementing service producers are one or more Session Management Functions (SMFs);
wherein the one or more combined third network functions (103) implementing service producers are one or more PGW-C+SMFs; or
wherein the one or more standalone third network functions (103) implementing service producers are one or more standalone SMFs.

8. A method (500) performed by a second network function (102) implementing a Network Repository Function (NRF), comprising:
- receiving (S501), from a first network function (101, 201) implementing a service consumer, a discovery request for discovering one or more third network functions (103) implementing service producers, wherein the discovery request including one or more query parameters and a preference indication indicating whether one or more combined third network functions (103) or one or more standalone third network functions (103) are preferred; and
- transmitting (S502), to the first network function (101, 201), a discovery response including information about the discovered one or more third network functions (103), wherein the discovered one or more third network functions (103) are provided based on the preference indication and the one or more query parameters, **characterized in that** if there is a preferred third network function registered at the second network function but not matching the one or more query parameters, the discovered one or more third network functions (103) comprise one or more non-preferred third network functions (103) matching the one or more query parameters;
wherein the discovery response further includes a match indication for indicating whether the discovered one or more third network functions (103) match the preference indication.

9. The method (500) according to claim 8, wherein the preference indication indicates whether one or more combined third network functions (103) or one or more standalone third network functions (103) are preferred to be discovered.

10. The method (500) according to claim 9, when one or more combined third network functions (103) are preferred to be discovered:
if one or more combined third network functions (103) matching the one or more query parameters are discovered, the discovery response includes information about the discovered one or more combined third network functions (103); or
if no combined third network function (103) is discovered and one or more standalone third network functions (103) matching the one or more query parameters are discovered, the discovery response includes information about the discovered one or more standalone third network functions (103).

11. The method (500) according to claim 9, when one or more standalone third network functions (103) are preferred to be discovered:
if one or more standalone third network functions (103) matching the one or more parameters are discovered, the discovery response includes information about the discovered one or more standalone third network functions (103); or
if no standalone third network function (103) is discovered and one or more combined third network functions (103) matching the one or more parameters are discovered, the discovery response includes information about the discovered one or more combined third network functions (103).

12. The method (500) according to any one of claims 8-11, wherein the preference indication is represented by an information element preferred Packet Data Network Gateway (PGW) indication (preferred-pgw-ind) or an information element PGW indication (pgw-ind), or
wherein the match indication is represented by an information element preferred PGW match indication (preferredPgwMatchInd).

13. The method (500) according to any one of claims 8-12,
wherein the discovery request is a request of Nnrf_NFDiscovery_NFDiscover service operation during a Protocol Data Unit (PDU) session establishment procedure;
wherein the discovery response is a response of Nnrf_NFDiscovery_NFDiscover service operation during a PDU session establishment procedure;
wherein the first network function (101, 201) implementing service consumer is an Access and Mobility Management Function (AMF);
wherein the one or more third network functions (103) implementing service producers are one or more Session Management Functions (SMFs);
wherein the one or more combined third network functions (103) implementing service producers are one or more PGW-C+SMFs; or
wherein the one or more standalone third network functions (103) implementing service producers are one or more standalone SMFs.

14. A first network function (101, 201, 600) implementing a service consumer, comprising:
at least one processor (601); and
a non-transitory computer readable medium (602) coupled to the at least one processor (601), the non-transitory computer readable medium (602) contains instructions executable by the at least one processor (601), whereby the at least one processor (601) is configured to perform the method (400) according to any one of claims 1-7.

15. A second network function (102, 700) implementing a Network Repository Function (NRF), comprising:
at least one processor (701); and
a non-transitory computer readable medium (702) coupled to the at least one processor (701), the non-transitory computer readable medium (702) contains instructions executable by the at least one processor (701), whereby the at least one processor (701) is configured to perform the method (500) according to any one of claims 8-13.
